# EUROPEAN PATENT APPLICATION

(11) **EP 4 787 198 A1**
(43) Date of publication of application: **05.08.2026**
(21) Application number: 24869723.7
(22) Date of filing: 10.05.2024
(51) Int. Cl.: G06F 17/12

(54) **METHOD FOR SOLVING NONLINEAR EQUATION SET, AND RELATED DEVICE**

(30) Priority: 26.09.2023 CN 202311253320; 29.03.2024 CN 202410386670
(71) Applicant: Huawei Cloud Computing Technologies Co., Ltd., Gui'an New District, Guizhou 550025 (CN)
(72) Inventor: XIAO, Fan, Guiyang, Guizhou 550025 (CN); GUO, Jinhao, Guiyang, Guizhou 550025 (CN); CAO, Liang, Guiyang, Guizhou 550025 (CN); HUANG, Yifei, Guiyang, Guizhou 550025 (CN); CHEN, Chengbo, Guiyang, Guizhou 550025 (CN)
(74) Representative: Goddar, Heinz J.
(86) International application number: PCT/CN2024/092193
(87) International publication number: WO 2025/066155

(57) **Abstract**

Embodiments of this application disclose a method for solving a system of nonlinear equations. In the method, during an i^{th} iteration of a first system of nonlinear equations, a neural network model can identify, based on input description information of the i^{th} iteration, system of equations feature information of the first system of nonlinear equations during the i^{th} iteration, to efficiently determine a first convergence policy that is appropriate for the first system of nonlinear equations in the current iteration process. In this way, a target convergence policy is determined according to the first convergence policy, and the first system of nonlinear equations is iteratively solved efficiently and accurately according to the target convergence policy, so that performance of iterative solving on a system of nonlinear equations is improved (for example, a solving speed is improved and solving time consumption is reduced), and a generalization problem caused by a convergence policy determined based on expert experience and according to a default convergence policy is avoided, thereby resolving a problem that a convergence policy determined in different scenarios has a poor effect and is difficult to converge when a system of nonlinear equations is solved.

## Description

This application claims priorities to Chinese Patent Application No. 202311253320.3, filed with the China National Intellectual Property Administration on September 26, 2023, and entitled "MATHEMATICAL SOLVING METHOD, APPARATUS, AND SYSTEM", and to Chinese Patent Application No. 202410386670.5, filed with the China National Intellectual Property Administration on March 29, 2024 and entitled "METHOD FOR SOLVING SYSTEM OF NONLINEAR EQUATIONS AND RELATED DEVICE", both of which are incorporated herein by reference in their entireties.

### TECHNICAL FIELD

This application relates to the field of artificial intelligence technologies, and specifically, to a method for solving a system of nonlinear equations and a related device.

### BACKGROUND

In fields such as industrial simulation, computer-aided engineering (computer-aided engineering, CAE) simulation in an engineering design is often used to analyze physical performance of engineering and products.

In a CAE simulation process, solving a system of equations is usually an important and time-consuming task. In a plurality of CAE simulation scenarios, a large quantity of system of nonlinear equations solving tasks are involved.

Currently, a system of nonlinear equations is usually iteratively solved according to a default convergence policy or a convergence policy set through manual experience.

However, it is difficult for a fixed convergence policy to have a good effect on solving of various nonlinear problems, and policy adjustment cannot be performed in an iteration process. In addition, manual experience usually needs to be accumulated for a long time and cannot be quickly obtained, and participation of related experts is needed in a solving process, affecting processing efficiency.

It can be learned that, currently, there is an urgent need for a method that can be used to efficiently and quickly determine an appropriate convergence policy when a system of nonlinear equations is iteratively solved.

### SUMMARY

Embodiments of this application provide a method for solving a system of nonlinear equations, so that an appropriate convergence policy can be efficiently and quickly determined when a system of nonlinear equations is iteratively solved. This application further provides a corresponding apparatus, a device, a computer-readable storage medium, a computer program product, and the like.

A first aspect of this application provides a method for solving a system of nonlinear equations, applied to a compute device cluster, where the method includes: obtaining a first system of nonlinear equations; obtaining, based on the first system of nonlinear equations, description information of an i^{th} iteration of the first system of nonlinear equations, where the description information of the i^{th} iteration is used to describe system of equations feature information of the first system of nonlinear equations during the i^{th} iteration, and i is a positive integer; performing inference on the description information of the i^{th} iteration of the first system of nonlinear equations through a neural network model, to obtain at least one first convergence policy of the i^{th} iteration; and determining a target convergence policy according to the at least one first convergence policy, and solving the first system of nonlinear equations through the i^{th} iteration according to the target convergence policy, to obtain a target solution of the first system of nonlinear equations.

In the first aspect, during the i^{th} iteration of the first system of nonlinear equations, the neural network model can identify, based on the input description information of the i^{th} iteration, the system of equations feature information such as a feature of the first system of nonlinear equations and a feature of a current iteration parameter of the first system of nonlinear equations during the i^{th} iteration, to efficiently determine the first convergence policy that is appropriate for the first system of nonlinear equations in the current iteration process. In this way, the target convergence policy is determined according to the first convergence policy, and the first system of nonlinear equations is iteratively solved efficiently and accurately according to the target convergence policy, so that performance of iterative solving on a system of nonlinear equations is improved (for example, a solving speed is improved and solving time consumption is reduced), and a generalization problem caused by a convergence policy determined based on expert experience and according to a default convergence policy is avoided, thereby resolving a problem that a convergence policy determined in different scenarios has a poor effect and is difficult to converge when a system of nonlinear equations is solved.

In a possible implementation of the first aspect, the description information of the i^{th} iteration includes at least one of the first system of nonlinear equations, a Jacobian matrix of the i^{th} iteration, a right-hand side of the i^{th} iteration, and a current solution of the i^{th} iteration.

In this possible implementation, the description information of the i^{th} iteration may include a mathematical expression of the first system of linear equations, and/or iteration parameter information of the i^{th} iteration. The iteration parameter information may include at least one of the Jacobian matrix, the right-hand side, and the current solution of the i^{th} iteration that are of a system of iteration equations corresponding to the first system of nonlinear equations.

In a possible implementation of the first aspect, the target convergence policy includes one or more of the following policies: a convergence algorithm, a step policy, and a direction policy.

In this possible implementation, the target convergence policy may include a policy of one aspect, or may include a policy combination of a plurality of aspects, so that a better iterative search path in a solving process of a system of nonlinear equations is determined from one or more aspects, thereby improving iteration performance.

In a possible implementation of the first aspect, the description information of the i^{th} iteration further includes to-be-solved physical problem information, the first system of nonlinear equations is obtained by performing numerical simulation on the to-be-solved physical problem information, and the to-be-solved physical problem information includes at least one of the following: a boundary condition, mesh information, and a physical equation.

In this possible implementation, as upper-layer scenario information involved in constructing the first system of nonlinear equations, the physical problem information is strongly correlated with the first system of nonlinear equations obtained through construction. Therefore, the description information of the i^{th} iteration may include the physical problem information associated with the first system of nonlinear equations. Therefore, in a subsequent processing process, the physical problem information is used as an input of the neural network model, so that the neural network model mines useful scenario feature information and feature information of the first system of nonlinear equations from the physical problem information.

In a possible implementation of the first aspect, determining the target convergence policy according to the at least one first convergence policy, and solving the first system of nonlinear equations through the i^{th} iteration according to the target convergence policy, to obtain the target solution of the first system of nonlinear equations includes: obtaining first configuration information, where the first configuration information indicates to use a recommended convergence policy set and/or at least one of a historical convergence policy set, a user-defined convergence policy set, and a default convergence policy set as convergence policy sets/a convergence policy set, the recommended convergence policy set includes the at least one first convergence policy, and at least one of the historical convergence policy set, the user-defined convergence policy set, and the default convergence policy set includes at least one second convergence policy; determining a plurality of convergence policies of the i^{th} iteration based on the first configuration information, where the plurality of convergence policies include the at least one first convergence policy and/or the at least one second convergence policy; selecting the target convergence policy from the plurality of convergence policies; and solving the first system of nonlinear equations through the i^{th} iteration according to the target convergence policy, to obtain the target solution of the first system of nonlinear equations.

In this possible implementation, considering that different convergence policies are applicable to different application scenarios, for example, are applicable to physical problems in different physical scenarios, the plurality of convergence policies may be provided based on the first configuration information. In this way, adaptation degrees of different convergence policies in different application scenarios (for example, different physical problems) may be fully considered, for selecting a more appropriate target convergence policy in a current scenario from the plurality of convergence policies, thereby improving quality of the finally obtained target convergence policy, and further improving solving performance of an iterative solving process of the first system of nonlinear equations.

In a possible implementation of the first aspect, selecting the target convergence policy from the plurality of convergence policies includes: obtaining second configuration information, where the second configuration information includes a performance evaluation indicator, or includes the performance evaluation indicator and a weight corresponding to each performance evaluation indicator; and selecting the target convergence policy from the plurality of convergence policies based on the second configuration information and performance parameter information of each of the plurality of convergence policies.

In this possible implementation, any performance evaluation indicator may be used to evaluate iteration performance of a corresponding convergence policy used as a convergence policy of the i^{th} iteration. A user can flexibly configure a performance evaluation indicator based on an actual scenario requirement (for example, in some examples, a plurality of performance evaluation indicators can be flexibly set from a plurality of dimensions, to perform convergence policy selection from the plurality of dimensions), to flexibly set a target convergence policy selection manner. In this way, a corresponding target convergence policy with good iteration performance can be selected from the plurality of convergence policies of the i^{th} iteration based on information such as a performance evaluation indicator and a related weight. Therefore, the first system of nonlinear equations may be solved through the i^{th} iteration according to the target convergence policy, so that solving performance meets a current scenario requirement.

In a possible implementation of the first aspect, the performance evaluation indicator includes one or more of the following: nonlinear evaluation and/or linear evaluation, where the nonlinear evaluation is performed based on the first system of nonlinear equations and the performance parameter information of each of the plurality of convergence policies, and the linear evaluation is performed based on a system of iteration equations corresponding to the first system of nonlinear equations and the performance parameter information of each of the plurality of convergence policies; the nonlinear evaluation includes one or more of the following: convergence evaluation, solving speed evaluation, and accuracy evaluation; and the linear evaluation includes one or more of the following: convergence evaluation, solving speed evaluation, and accuracy evaluation.

In this possible implementation, the user can flexibly set, from a nonlinear evaluation dimension and/or a linear evaluation dimension, the target convergence policy selection manner based on the actual scenario requirement, to select, from the plurality of convergence policies of the i^{th} iteration, the target convergence policy that meets the current scenario requirement and that has good iteration performance.

In a possible implementation of the first aspect, the neural network model is obtained through training based on a data set, the data set includes first training data and a label of the first training data, the first training data includes description information of a second system of nonlinear equations, the description information of the second system of nonlinear equations is used to describe system of equations feature information of the second system of nonlinear equations in a historical iteration process, and the label of the first training data includes a third convergence policy corresponding to the second system of nonlinear equations.

In this possible implementation, the neural network model may be a trained model. The neural network model may be trained in the compute device cluster, or may be transmitted to the compute device cluster and deployed in the compute device cluster after being trained in another device.

The second convergence policy may be considered as an optimal convergence policy for solving the second system of nonlinear equations. In some examples, for a second system of nonlinear equations, a second convergence policy of the second system of nonlinear equations may be fixed. In some other examples, for a second system of nonlinear equations, a second convergence policy of the second system of nonlinear equations may be flexibly adjusted based on a user configuration.

In a possible implementation of the first aspect, the first training data corresponds to a plurality of groups of candidate convergence policies and performance parameter information corresponding to each group of candidate convergence policies; and the method further includes: receiving third configuration information input by a user, where the third configuration information includes the performance evaluation indicator, or includes the performance evaluation indicator and the weight corresponding to each performance evaluation indicator; and determining, based on the third configuration information and the performance parameter information of each group of candidate convergence policies corresponding to the first training data, the third convergence policy in the label of the first training data from the plurality of groups of candidate convergence policies corresponding to the first training data.

In this possible implementation, the performance evaluation indicator is used to evaluate solving performance of a candidate convergence policy. For example, the performance evaluation indicator in the third configuration information may include one or more of the following evaluation indicators: solving accuracy, solving duration, and a quantity of iterations.

In this way, the user may flexibly adjust, based on an actual application scenario requirement by configuring a performance evaluation indicator or including the performance evaluation indicator and a weight corresponding to each performance evaluation indicator, an optimal convergence policy needed in a current scenario, so that a convergence policy recommendation manner learned by a trained neural network model can meet a current scenario requirement.

In a possible implementation of the first aspect, the method further includes: receiving fourth configuration information input by the user, where the fourth configuration information indicates a policy range to which the candidate convergence policy belongs, and the policy range includes or more of the following: one or more convergence algorithms, one or more step policies, and one or more direction policies; and obtaining, based on the fourth configuration information, a plurality of groups of candidate convergence policies corresponding to each piece of first training data.

In this possible implementation, the user may configure a selectable range of a candidate convergence policy in one or more policy dimensions (for example, a convergence algorithm, a step policy, and/or a direction policy). Therefore, a candidate convergence policy corresponding to second training data is limited within a specified range (for example, a range of a convergence policy that can be executed by a nonlinear iterative solving service), that is, a second convergence policy in a label of the second training data is limited within the specified range. In this way, the convergence policy recommendation manner that can be learned by the trained neural network model is limited within a specified range, so that a convergence policy output by the neural network model can be executed in an inference phase.

In a possible implementation of the first aspect, the method further includes: generating second training data and a label of the second training data, where the second training data includes the description information of the i^{th} iteration, and the label of the second training data includes the target convergence policy; and training the neural network model based on the second training data, to obtain an optimized neural network model.

In this possible implementation, the neural network model can be continuously iteratively updated with a change of user data distribution and a user data scale in an actual application scenario for continuous optimization, so that the optimized neural network model more adapts to a current scenario requirement, and can generate better target convergence policies for iteration processes of systems of nonlinear equations in different scenarios, thereby improving solving performance.

A second aspect of this application provides an apparatus for solving a system of nonlinear equations. The apparatus has a function of implementing the method according to any one of the first aspect or the possible implementations of the first aspect. The function may be implemented by hardware, or may be implemented by the hardware executing corresponding software. The hardware or the software includes one or more modules corresponding to the function, for example, an interface module and a processing module.

A third aspect of this application provides a compute device cluster. The compute device cluster includes at least one compute device, each compute device includes a processor and a memory, a memory of the at least one compute device stores computer-executable instructions that can be run on the processor, and when the computer-executable instructions are executed by the processor, the processor performs the method according to any one of the first aspect or the possible implementations of the first aspect.

A fourth aspect of this application provides a computer-readable storage medium storing one or more computer-executable instructions. When the computer-executable instructions are executed by a compute device cluster, the compute device cluster performs the method according to any one of the first aspect or the possible implementations of the first aspect.

A fifth aspect of this application provides a computer program product storing one or more computer-executable instructions. The computer program product includes the computer-executable instructions. When the computer-executable instructions are executed by a compute device cluster, the compute device cluster performs the method according to any one of the first aspect or the possible implementations of the first aspect.

A sixth aspect of this application provides a chip system. The chip system includes a processor, configured to support a compute device cluster in implementing functions according to any one of the first aspect or the possible implementations of the first aspect. In a possible design, the chip system may further include a memory. The memory is configured to store necessary program instructions and data. The chip system may include a chip, or may include the chip and another discrete component.

For technical effects brought by any one of the second aspect to the sixth aspect or the possible implementations of the second aspect to the sixth aspect, refer to the technical effects brought by the first aspect or the related possible implementations of the first aspect. Details are not described herein again.

### BRIEF DESCRIPTION OF DRAWINGS

FIG. 1 is a schematic flowchart of an example of CAE simulation according to an embodiment of this application;
FIG. 2 is an example diagram of a data center according to an embodiment of this application;
FIG. 3 is an example diagram of executing a CAE simulation-related task through a cloud management platform according to an embodiment of this application;
FIG. 4 is a diagram of an embodiment of a method for solving a system of nonlinear equations according to an embodiment of this application;
FIG. 5 is an example diagram of model training according to an embodiment of this application;
FIG. 6 is an example diagram of iteratively solving a first system of nonlinear equations through a convergence policy optimization module according to an embodiment of this application;
FIG. 7 is an example diagram of a processing procedure according to an embodiment of this application;
FIG. 8 is an example diagram of executing a system of nonlinear equations solving task through a cloud management platform according to an embodiment of this application;
FIG. 9 is an example diagram of a computer model of a solenoid valve according to an embodiment of this application;
FIG. 10 is a diagram of an embodiment of an apparatus for solving a system of nonlinear equations according to an embodiment of this application;
FIG. 11 is a diagram of a structure of a compute device according to an embodiment of this application;
FIG. 12 is a diagram of a structure of a compute device cluster according to an embodiment of this application; and
FIG. 13 is a diagram of a structure of a compute device cluster according to an embodiment of this application.

### DESCRIPTION OF EMBODIMENTS

The following describes embodiments of this application with reference to the accompanying drawings in embodiments of this application. Terms used in implementations of this application are only used to explain specific embodiments of this application, but are not intended to limit this application.

A person of ordinary skill in the art can know that the technical solutions provided in embodiments of this application are also applicable to similar technical problems with development of technologies and emergence of a new scenario.

In this application, "at least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items" or a similar expression thereof means any combination of these items, including any combination of singular items or plural items. In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Before embodiments of this application are described, some concepts in embodiments of this application are first described.

### 1. CAE simulation

The CAE simulation is a process of analyzing and solving engineering problems through numerical calculation and simulation by using computer-aided engineering technologies. The CAE simulation is an engineering analysis method based on computer technologies, where virtual tests may be performed on a product in a design phase, to evaluate performance, reliability, security, and the like of the product, so that costs and time of actual tests are reduced. The CAE simulation may be applied to various engineering fields such as machinery, electronics, aerospace, automobiles, and architecture, to simulate various physical phenomena such as structural mechanics, fluid mechanics, and heat conduction.

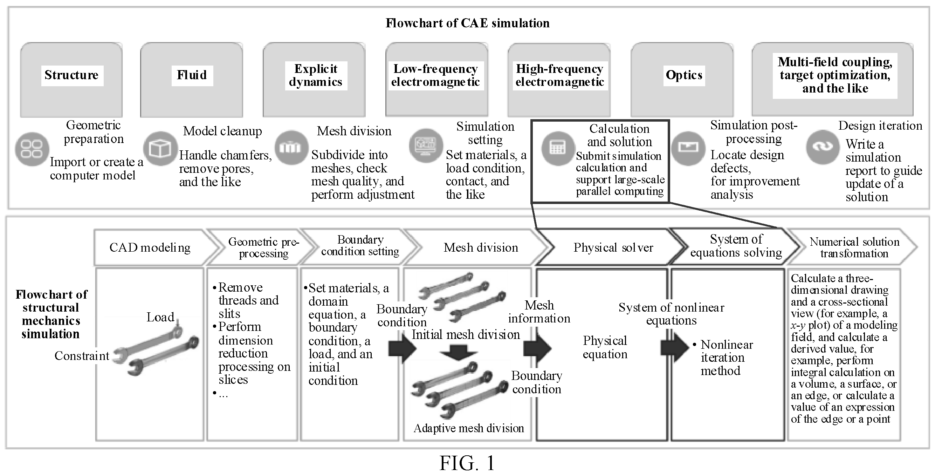

FIG. 1 is a schematic flowchart of an example of CAE simulation.

In a simulation procedure shown in FIG. 1, computer-aided design (computer-aided design, CAD) modeling may be first performed on a physical problem, to obtain a computer model. The computer model may be a digital model obtained in a computer through specified software, and may virtually describe a physical structure. The computer model may be newly created through CAD, or may be obtained in another manner (for example, from another device) and imported.

Then, geometric pre-processing may be performed on the computer model obtained through modeling. For example, threads and slits in the computer model may be removed, and dimension reduction processing is performed on slices. Then, one or more of materials, a domain equation, a boundary condition, a load, an initial condition, and the like of the computer model may be set, and mesh division may be then performed on the computer model. After the mesh division is completed, a physical equation may be generated based on a to-be-resolved physical problem, and a system of partial differential equations is obtained through construction, to obtain a to-be-solved system of equations.

After the to-be-solved system of equations (for example, a system of nonlinear equations shown in FIG. 1) is obtained, the system of equations may be solved (for example, solved according to a nonlinear iteration method and the like in FIG. 1). After a solving result is obtained, the corresponding physical problem may be resolved based on the solving result, to obtain a simulation result. For example, in the example shown in FIG. 1, after the solving result of the system of linear equations is obtained, based on the solving result, a three-dimensional drawing or a cross-section view of the computer model may be calculated, and a derived value may be calculated, for example, integral calculation is performed on a volume, a surface, or an edge, or a value of an expression of an edge or a point is calculated.

After the simulation result is obtained, simulation post-processing may be performed. For example, defects of a design scheme in engineering may be located based on the simulation result, for improvement analysis. In addition, the design scheme may be further iteratively updated. For example, a simulation report may be written based on the simulation result, to guide update of a corresponding design scheme.

The CAE simulation may be used to solve a plurality of physical problems, for example, problems in terms of structure, fluid, explicit dynamics, low-frequency electromagnetic, optics, and multi-field coupling, and target optimization shown in FIG. 1. It can be learned that the CAE simulation is widely applied to various actual engineering application scenarios in the industrial field.

### 2. Numerical calculation

In the example shown in FIG. 1, after the to-be-solved system of equations is obtained, the system of equations may be solved through the numerical calculation, to obtain a corresponding solving result.

The numerical calculation is a method for solving a mathematical problem by using a computer, to resolve the mathematical problem, for example, solving an equation, solving a calculus problem, and optimizing a problem. A basic idea of the numerical calculation is to convert a mathematical problem into a numerical calculation problem that can be processed by the computer, and then perform calculation by using the computer, to obtain a numerical solution. The numerical calculation includes numerical approximation, numerical integration, numerical differentiation, numerical algebra, numerical equation solving, numerical optimization, and the like. The numerical calculation is widely applied to the fields such as scientific computing, engineering calculation, financial computing, and statistics calculation.

There may be a plurality of methods for numerical calculation, including, for example, a nonlinear iteration method and a linear iteration method.

Because embodiments of this application relate to the nonlinear iteration method, the following describes the nonlinear iteration method.

### 3. Nonlinear iteration method

The nonlinear iteration method is an iteration method for solving a system of nonlinear equations. The nonlinear iteration method is to obtain an approximate solution of a system of nonlinear equations through limited iterations. For example, a Newton iteration method may be used to continuously solve a linear problem, and a solving result is iteratively updated to gradually approach a real solution of a nonlinear problem.

Specifically, a system of nonlinear equations may be converted into a system of iteration equations when being solved. The system of iteration equations includes one or more iteration equations. The one or more iteration equations may include a Jacobian matrix and a right-hand side, to form a thread equation including the Jacobian matrix, the right-hand side, and a variable. In this way, the system of iteration equations may be used to continuously solve the linear problem, and the solving result is iteratively updated to gradually approach the real solution of the nonlinear problem.

In the CAE simulation process, solving a system of equations is usually an important and time-consuming task.

In a plurality of CAE simulation scenarios, a large quantity of system of nonlinear equations solving tasks are involved, for example, fluid simulation analysis of an automobile air conditioning system guiding design and optimization of the air conditioning system, simulation analysis of nonlinear materials in structural mechanics problem simulation, and collision analysis during automobile research and development.

If a software functional module configured to solve a system of nonlinear equations is referred to as a nonlinear solver, in actual application, when iteratively solving the system of nonlinear equations in each iteration process according to a nonlinear iteration method like a Newton iteration method, the nonlinear solver may invoke a linear solver to perform calculation, support solving of a Jacobian matrix of a free matrix, and is configured to solve problems such as nonlinear mechanics, materials, and contact in a plurality of engineering scenarios in terms of structure, fluid, electromagnetic, and multi-physical field coupling. Frequently-used nonlinear iteration methods include a Newton method, a quasi-Newton method, an inexact Newton method, and the like. In addition a convergence policy is required for iteration in a solving process.

### 4. Convergence policy

In a scenario of solving a system of nonlinear equations, the convergence policy is used to obtain a convergence path of an iterative solving process of the system of nonlinear equations.

Specifically, the convergence policy may include a convergence algorithm, a direction policy, a step policy, or a combination thereof.

The convergence algorithm may include line search, a trust region, and the like. The direction policy is used to obtain an iteration direction. The step policy is used to obtain an iteration step.

It may be understood that, solving performance of the iterative solving process of the system of nonlinear equations is affected by a quantity of iterations and time of a single iteration, and different directions and steps may be obtained from different convergence policies, that is, different iterative search paths are obtained, resulting in different calculation costs.

If an improper convergence algorithm is selected, flapping or divergence may occur during iteration, leading to a convergence failure. If a step is too large or too small or a direction is incorrect, more iterations may need to be performed to obtain a real solution through convergence, which increases calculation time. It can be learned that a group of good convergence policies can significantly reduce a quantity of iterations in a solving process, thereby reducing time for solving the system of nonlinear equations.

Currently, the system of nonlinear equations is usually iteratively solved according to a default convergence policy or a convergence policy set based on a current scenario through manual experience.

However, in an actual CAE simulation scenario, there are a plurality of types of involved physical problems. Properties of to-be-solved systems of nonlinear equations derived from physical problems of different types are different. In addition, although structures of systems of nonlinear equations derived from physical problems of a same type are similar, properties and scales of matrices change. Therefore, it is difficult for a fixed convergence policy to have a good effect on solving of various nonlinear problems, and policy adjustment cannot be performed in an iteration process.

In addition, manual experience usually needs to be accumulated for a long time and cannot be quickly obtained, and participation of related experts is needed in a solving process, affecting processing efficiency.

In conclusion, currently, there is an urgent need for a method that can be used to efficiently and quickly determine an appropriate convergence policy when a system of nonlinear equations is iteratively solved.

The method in embodiments of this application may be applied to a compute device cluster, and the compute device cluster may include one or more compute devices.

A type of any compute device is not limited herein. For example, any compute device may be a terminal device, or may be a server, a container (container), a virtual machine (virtual machine), or the like.

In an example, the compute device cluster may be configured to implement a cloud management platform. In other words, embodiments of this application may be applied to the cloud management platform.

The cloud management platform is configured to manage an infrastructure that provides cloud services, and may provide computing, network, and storage capabilities based on services of a hardware resource and a software resource. For example, the cloud management platform and the infrastructure may be located in one or more data centers, to provide cloud resources through the one or more data centers.

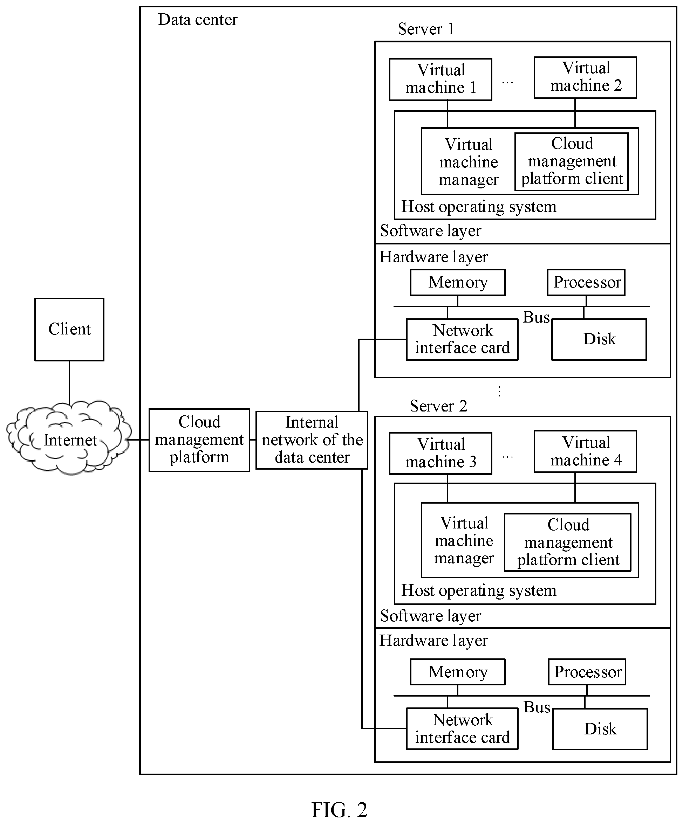

The following describes the data center by using an example with reference to a diagram of an architecture shown in FIG. 2.

In FIG. 2, a cloud management platform exchanges information with one or more servers (for example, a server 1 and a server 2 in FIG. 2) via an internal network of a data center. The server includes a hardware layer and a software layer. The hardware layer includes hardware configured for the server. A PCI device may be a device like a network interface card, a graphics processing unit (graphics processing unit, GPU), or an offload card that can be inserted into a peripheral component interconnect (peripheral component interconnect, PCI) slot or a peripheral component interconnect express (peripheral component interconnect express, PCIe) slot of the server. The software layer includes an operating system installed and running on the server (where an operating system relative to a virtual machine may be referred to as a host operating system). A virtual machine manager (also referred to as a hypervisor) is disposed in the host operating system. The virtual machine manager functions to implement computing virtualization, network virtualization, and storage virtualization of the virtual machine, and is responsible for managing the virtual machine. The virtual machine (virtual machine) is a complete computer system simulated by using software, has functions of a complete hardware system, and runs in a totally isolated environment. In the system architecture shown in FIG. 2, the plurality of servers are disposed in the infrastructure, the servers may be configured to run virtual machines, and specifications of the virtual machines may be the same or may be different. The virtual machine may also be referred to as a cloud server (elastic compute service, ECS), an elastic instance, or the like. Different cloud service providers have different names.

In an example of this embodiment of this application, the cloud management platform may be a public cloud platform. In this case, a cloud service provider, for example, an individual or a software developer that has a cloud resource development capability, may provide a cloud service for a user, and the user obtains the cloud service through an Internet, but does not have cloud computing resources. In another embodiment of this application, the cloud management platform may be a private cloud platform or a hybrid cloud platform. This is not limited in this application.

Specifically, in the example shown in FIG. 2, the cloud management platform may provide an access interface (for example, an interface or an application programming interface (application programming interface, API)), and the user of the cloud management platform and the cloud service provider can operate a client to remotely access the access interface to register a cloud account and a password with the cloud management platform, and log in to the cloud management platform after the cloud account and the password are successfully authenticated by the cloud management platform, so as to create, manage, log in to, and operate the virtual machine in the cloud data center.

For example, when a first system of nonlinear equations solving task needs to be executed, some enterprises, organizations, or individuals may purchase the cloud service, to execute the related first system of nonlinear equations solving task by using cloud resources of the cloud management platform, and obtain a corresponding solving result from the cloud management platform.

Certainly, the cloud management platform may alternatively be a cloud management platform of another type. This is not limited in this embodiment of this application.

In some examples, the cloud management platform may provide the user with a convergence policy recommendation service and a nonlinear iterative solving service for solving a first system of nonlinear equations, and may further provide a numerical calculation solving service, a CAE simulation service, and the like. In this way, the user may execute a CAE simulation task through the cloud management platform, generate a first system of nonlinear equations in a process of executing the CAE simulation task, and then execute the first system of nonlinear equations solving task through the cloud management platform.

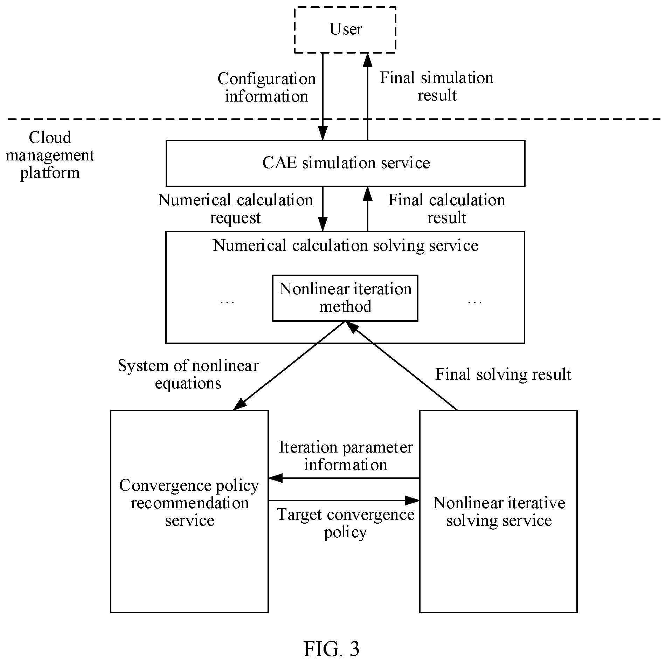

FIG. 3 is an example diagram of executing a CAE simulation task through a cloud management platform.

A user may send configuration information to a CAE simulation service of the cloud management platform, to configure the invoked service, and may trigger the CAE simulation service to send a numerical calculation request to a numerical calculation solving service. The numerical calculation request is used to request to perform numerical calculation related to a system of nonlinear equations. Then, the numerical calculation solving service may select, based on the configuration information of the user and the like, a nonlinear iteration method to solve the system of nonlinear equations, to invoke a nonlinear iterative solving service. In each iteration process, the nonlinear iterative solving service may invoke a convergence policy recommendation service. The convergence policy recommendation service obtains a target convergence policy based on related description information (for example, in the example shown in FIG. 3, the system of nonlinear equations obtained from the numerical calculation solving service, iteration parameter information (at least one of a Jacobian matrix of an i^{th} iteration, a right-hand side of the i^{th} iteration, and a current solution of the i^{th} iteration) obtained from the nonlinear iterative solving service, and the like) of the system of nonlinear equations in the current iteration process, and transmits the target convergence policy to the nonlinear iterative solving service for iterative solving, to obtain a solving result. The final solving result may be fed back to the CAE simulation service, so that the CAE simulation service can obtain a simulation result and output the simulation result to the user.

It should be noted that the service in FIG. 3 is merely an example of a service provided by the cloud management platform, and is not a limitation.

For example, in some other examples, the cloud management platform does not provide the CAE simulation service. The user performs CAE simulation through a client, to obtain information such as a corresponding computer model. Then, the user may directly send the numerical calculation request to the numerical calculation solver service of the cloud management platform through the client, to request to perform numerical calculation related to the system of linear equations. In another embodiment provided in this application, the service may be deployed entirely in a server cluster of a customer. This is not limited in this application. In addition, in some other examples, function division manners of services may be different from that of the service shown in FIG. 3, and deployment manners of the services may also be different. Each service may be provided independently or may be embedded in another service, or a plurality of services may be combined and then deployed.

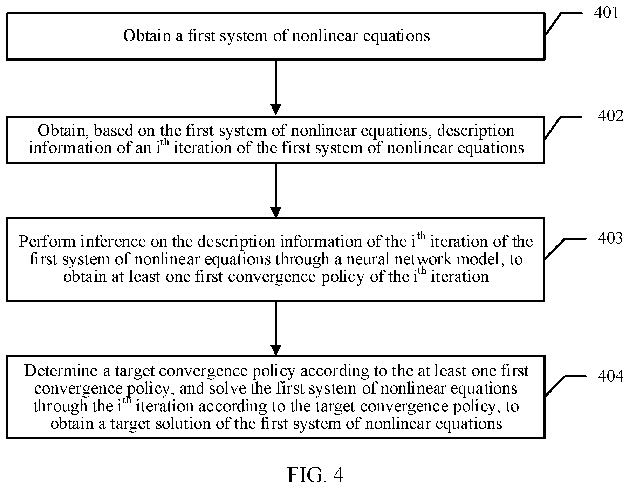

Based on the foregoing compute device cluster and the architecture of the cloud management platform shown in FIG. 3, as shown in FIG. 4, in this embodiment of this application, a target convergence policy may be determined based on a neural network model through the compute device cluster, so that a system of nonlinear equations is iteratively solved according to the target convergence policy.

Specifically, a method for solving a system of nonlinear equations provided in this embodiment of this application may include step 401 to step 404.

Step 401: Obtain a first system of nonlinear equations.

The first system of nonlinear equations includes one or more nonlinear equations.

For example, the first system of nonlinear equations may be obtained by the compute device cluster by performing numerical simulation through CAE simulation based on to-be-solved physical problem information; or the first system of nonlinear equations may be pre-stored in a memory or a hard disk of the compute device cluster, and read from the memory or the hard disk; or the first system of nonlinear equations may be obtained by the compute device cluster from another device (for example, a client device).

Step 402: Obtain, based on the first system of nonlinear equations, description information of an i^{th} iteration of the first system of nonlinear equations.

The description information of the i^{th} iteration is used to describe system of equations feature information of the first system of nonlinear equations during the i^{th} iteration, and i is a positive integer.

In this embodiment of this application, execution of step 402 and subsequent steps may be triggered during one or more iterations in a process of solving the first system of nonlinear equations, so that a target convergence policy of the current one or more iterations is obtained by using the method in this embodiment of this application, and the first system of nonlinear equations is iteratively solved according to the target convergence policy of the current iteration.

For example, in the example shown in FIG. 3, before each iteration, the nonlinear iterative solving service may transmit description information of the current iteration to the convergence policy recommendation service, or indicate the convergence policy recommendation service to obtain the description information of the current iteration from another service or device, so that the convergence policy recommendation service obtains the target convergence policy of the current iteration based on the description information of the current iteration and feeds back the target convergence policy of the current iteration to the nonlinear iterative solving service. The nonlinear iterative solving service may perform current iterative solving according to the target convergence policy of the current iteration.

The i^{th} iteration may be any iteration in the process of solving the first system of nonlinear equations. For example, the i^{th} iteration may be a 1^{st} iteration, or may be a subsequent iteration.

The description information of the i^{th} iteration is used to describe the system of equations feature information of the first system of nonlinear equations during the i^{th} iteration. In addition, in some examples, the description information of the i^{th} iteration further includes to-be-solved physical problem information. When values of i are different, the description information of the i^{th} iteration may be different.

The following describes, by using an example, specific content that may be included in the description information of the i^{th} iteration.

### 1. First system of nonlinear equations

The first system of nonlinear equations included in the description information of the i^{th} iteration may be a mathematical expression (for example, may be a mathematical expression including an operator, cos, sin, a power, and the like) of the first system of linear equations, or may include information such as a variable and a coefficient of the variable in the first system of linear equations.

### 2. Iteration parameter information of the i^{th} iteration

The iteration parameter information of the i^{th} iteration is used to describe an initial state of the i^{th} iteration.

In some embodiments, the iteration parameter information of the i^{th} iteration includes but is not limited to at least one of the following information:
information about a system of iteration equations corresponding to the first system of nonlinear equations, and a current solution of the i^{th} iteration.

The system of iteration equations corresponding to the first system of nonlinear equations is obtained by converting the first system of nonlinear equations, for example, may be obtained through conversion according to a nonlinear iteration method.

The first system of nonlinear equations may be converted into a corresponding system of iteration equations when being solved. The system of iteration equations includes one or more iteration equations. The one or more iteration equations may include a Jacobian matrix and a right-hand side, to form a linear equation including the Jacobian matrix, the right-hand side, and a variable. In this way, the system of iteration equations may be used to continuously solve a linear problem, and a solving result is iteratively updated to gradually approach a real solution of the system of nonlinear equations.

In other words, the description information of the i^{th} iteration may include a Jacobian matrix of the i^{th} iteration and/or a right-hand side of the i^{th} iteration.

The current solution of the i^{th} iteration is related to a value of i.

Specifically, when i is 1, the current solution of the i^{th} iteration is an initial solution obtained by solving the first system of nonlinear equations.

When i is a positive integer greater than 1, the current solution of the i^{th} iteration is a solution obtained through an (i-1)^{th} iteration.

In addition, in some other examples, the iteration parameter information of the i^{th} iteration may also include other information, for example, may include a performance parameter of the current solution of the i^{th} iteration.

For example, the performance parameter of the current solution of the i^{th} iteration may include one or more of the following parameters:
an error of the current solution of the i^{th} iteration, solving duration of the (i-1)^{th} iteration, and a quantity of current iterations (for example, a value of i).

Specifically, when i is 1, the current solution of the i^{th} iteration is an initial solution obtained by solving a system of nonlinear equations. In this case, the performance parameter of the current solution of the i^{th} iteration may include an error of the initial solution and/or a value of i. However, because iteration has not been started, the performance parameter does not include the solving duration of the (i-1)^{th} iteration.

When i is a positive integer greater than 1, the performance parameter of the current solution of the i^{th} iteration may include an error of a solution obtained through the (i-1)^{th} iteration, solving time of the (i-1)^{th} iteration, and a value of i.

### 3. To-be-solved physical problem information

The physical problem information is used to describe a to-be-solved physical problem in an industrial application scenario.

A specific field of the industrial application scenario is not limited herein. For example, the industrial application scenario may be a scenario in an engineering field like machinery, electronics, aerospace, automobile, or architecture.

In some examples, the physical problem information may be described by using a corresponding CAE simulation scenario. For example, in the procedure shown in FIG. 1, in the CAE simulation scenario, one or more of information such as a boundary condition, mesh information, and a corresponding physical equation that are of a corresponding computer model may be obtained through steps such as geometric pre-processing, boundary condition setting, mesh division, and physical equation setting, to obtain physical problem information associated with the system of linear equations.

The physical problem information includes at least one of the following information:
a boundary condition, mesh information, and a physical equation.

For example, in an example, the physical problem information may include the mesh information and the physical equation.

The boundary condition is used to describe a boundary condition of the corresponding computer model in CAE simulation. In the procedure shown in FIG. 1, the boundary condition may be generated after the geometric pre-processing. The boundary condition may be described in a plurality of manners. For example, the boundary condition may be described by using mesh point information, or may be described in a form of an equation (for example, a Dirichlet (Dirichlet) condition or a Newman (Neumann) condition).

The mesh information is used to describe a mesh division manner of the corresponding computer model. Specifically, the mesh division manner is a division manner in which the computer model is divided into a plurality of mesh cells. In the procedure shown in FIG. 1, the mesh information is completed in a mesh subdivision phase. The mesh information includes one or more of information such as mesh point coordinates and mesh division accuracy. For example, a plurality of mesh point coordinates may be described in a form of a matrix.

The physical equation is determined based on a to-be-solved physical problem. A quantity of physical equations involved in the description information of the i^{th} iteration is not limited herein. There may be one physical equation, or there may be a system of physical equations including a plurality of physical equations.

For example, the physical equation may include one or more of the following content:
(1) a physical equation in a mathematical form like a system of partial differential equations, for example, an electric potential Poisson equation and a pressure Poisson equation; and
(2) a physical parameter value in the physical equation, where for example, in a physical problem related to charge distribution, the physical parameter value may include a physical parameter like a capacitance of a mesh point.

The first system of nonlinear equations is obtained by performing numerical simulation on the to-be-solved physical problem information. It can be learned that the first system of nonlinear equations is constructed based on the physical problem information. In other words, the physical problem information affects a subsequently generated first system of nonlinear equations, and the physical problem information, used as upper-layer scenario information of the subsequently generated first system of nonlinear equations, affects a specific form and a scale of the subsequently generated first system of nonlinear equations.

It may be understood that, in this embodiment of this application, a data form of the to-be-solved physical problem information may include one or more of a matrix, an equation, a vector, a value, and the like.

It can be learned that in this embodiment of this application, as the upper-layer scenario information involved in constructing the first system of nonlinear equations, the physical problem information is strongly correlated with the first system of nonlinear equations obtained through construction. Therefore, the description information of the i^{th} iteration may include the physical problem information associated with the first system of nonlinear equations. Therefore, in a subsequent processing process, the physical problem information is used as an input of a neural network model, so that the neural network model mines useful scenario feature information and feature information of the first system of nonlinear equations from the physical problem information.

The description information of the i^{th} iteration may be obtained in a plurality of manners, and different content in the description information of the i^{th} iteration may be obtained in a same manner or different manners. This is not limited herein.

In an example, a user logs in to the cloud management platform through the client, sends, to the convergence policy recommendation service of the cloud management platform through the client, the first system of nonlinear equations and the to-be-solved physical problem information that are in the description information of the i^{th} iteration, and may process the first system of nonlinear equations.

In this example, the user may obtain, through the client, a computer model for CAE simulation and the like, obtain physical problem information through the computer model, and generate the to-be-solved first system of nonlinear equations based on the physical problem information. Then, information about the first system of nonlinear equations and the related physical problem information may be sent through the client to the compute device cluster that implements the cloud management platform.

In addition, in this example, the convergence policy recommendation service of the cloud management platform may obtain the iteration parameter information of the i^{th} iteration through the nonlinear iterative solving service of the cloud management platform, for example, obtain at least one of the Jacobian matrix of the i^{th} iteration, the right-hand side of the i^{th} iteration, and the current solution of the i^{th} iteration.

In another example, a user may obtain the description information of the i^{th} iteration by using cloud resources of the cloud management platform.

In this example, the user not only executes a system of nonlinear equations solving task by using the cloud resources of the cloud management platform, but also constructs a computer model for CAE simulation by using a first cloud resource of the cloud management platform. In this way, the corresponding physical problem information and the first system of nonlinear equations constructed based on the physical problem information may be obtained from the first cloud resource through the convergence policy recommendation service of the cloud management platform. In addition, in a solving process, the iteration parameter information of the i^{th} iteration may be obtained from the nonlinear iterative solving service, for example, at least one of the Jacobian matrix of the i^{th} iteration, the right-hand side of the i^{th} iteration, and the current solution of the i^{th} iteration is obtained.

Step 403: Perform inference on the description information of the i^{th} iteration of the first system of nonlinear equations through the neural network model, to obtain at least one first convergence policy of the i^{th} iteration.

The neural network model may be an existing model or a subsequently developed model. This is not limited in embodiments of this application. For example, the neural network model may be a general model like a physics-informed neural network (physics-informed neural network, PINN) or a CNN; or the neural network model may be a model that can solve a partial differential equation (partial differential equation, PDE). For example, the neural network model may be deeponet, and both training and inference are used as a solving process.

For different neural network models, processing performed on the description information of the i^{th} iteration may vary based on processing capabilities and requirements of different neural network models. For example, if the neural network model is the PINN, and the PINN cannot well directly process input data in a form of a matrix, a physical equation, or the like, feature engineering may be performed on the description information of the i^{th} iteration that includes the matrix and the physical equation. For example, the description information of the i^{th} iteration is encoded through a feature extraction model or undergoes data form conversion (for example, is converted into data in a vector form), and then is input to the PINN. If the neural network model is the deeponet, the description information of the i^{th} iteration including a form of a matrix, a physical equation, and/or the like may be received as input data.

In this embodiment of this application, the neural network model may be a trained model. The neural network model may be trained in the compute device cluster, or may be transmitted to the compute device cluster and deployed in the compute device cluster after being trained in another device.

The following describes a training process of the neural network model by using an example.

In this embodiment of this application, the training process may include one or more of the following steps.

1: Obtain a data set, where the data set includes a plurality of pieces of first training data and a label of each piece of first training data.

Each piece of first training data includes description information of a corresponding second system of nonlinear equations, the description information of the second system of nonlinear equations is used to describe system of equations feature information of the second system of nonlinear equations in a historical iteration process, and the label of the first training data includes a second convergence policy corresponding to the corresponding second system of nonlinear equations.

A collection manner of the data set is not limited herein. For example, the data set may be obtained from an open-source data set, or the data set may be generated by manually collecting information about iterative solving of a system of nonlinear equations in various different scenarios.

In the data set, second systems of nonlinear equations corresponding to different pieces of first training data may be the same or may be different. The second system of nonlinear equations may be the same as or different from the first system of nonlinear equations.

The following uses any first training data as an example to describe description information of a second system of nonlinear equations and a corresponding label.

The description information of the second system of nonlinear equations may include at least one of the second system of nonlinear equations, a Jacobian matrix of a system of iteration equations corresponding to the second system of equations, a right-hand side of the system of iteration equations corresponding to the second system of equations, and a current solution of the second system of equations in a historical iteration process.

The second system of nonlinear equations may be specifically a mathematical expression of the second system of nonlinear equations.

The historical iteration process of the second system of nonlinear equations may include a j^{th} iteration process in a pre-collected solving process of the second system of nonlinear equations. In this case, a third convergence policy in the label of the first training data may be a better convergence policy of the j^{th} iteration. j is a positive integer.

For example, when j is 1, the current solution of the second system of equations in the historical iteration process may be an initial solution of the second system of nonlinear equations.

When j is greater than 1, the current solution of the second system of equations in the historical iteration process may be a solution obtained through a (j-1)^{th} iteration of the second system of nonlinear equations.

Alternatively, the historical iteration process of the second system of nonlinear equations may be an end-to-end solving process of the second system of nonlinear equations, for example, may include an initial solution obtained by solving the second system of nonlinear equations. In this case, the third convergence policy in the label of the first training data may be a better convergence policy in the end-to-end solving process.

The second convergence policy may be considered as an optimal convergence policy for solving the second system of nonlinear equations.

In some examples, for a second system of nonlinear equations, a second convergence policy of the second system of nonlinear equations may be fixed.

In some other examples, for a second system of nonlinear equations, a second convergence policy of the second system of nonlinear equations may be flexibly adjusted based on a user configuration.

There may be a plurality of specific manners of determining the second convergence policy.

For example, in some embodiments, each piece of first training data corresponds to a plurality of groups of candidate convergence policies and performance parameter information corresponding to each group of candidate convergence policies.

The method further includes:
receiving third configuration information input by a user, where the third configuration information includes a performance evaluation indicator, or includes the performance evaluation indicator and a weight corresponding to each performance evaluation indicator; and
determining, based on the third configuration information and the performance parameter information of each group of candidate convergence policies corresponding to the first training data, the third convergence policy in the label of the first training data from the plurality of groups of candidate convergence policies corresponding to the first training data.

In this embodiment of this application, the performance parameter information corresponding to each group of candidate convergence policies indicates solving performance of a corresponding candidate convergence policy used in a solving process of a corresponding second system of nonlinear equations.

For example, the performance parameter information corresponding to each group of candidate convergence policies may include corresponding solving accuracy, corresponding solving duration, a corresponding quantity of iterations, and the like.

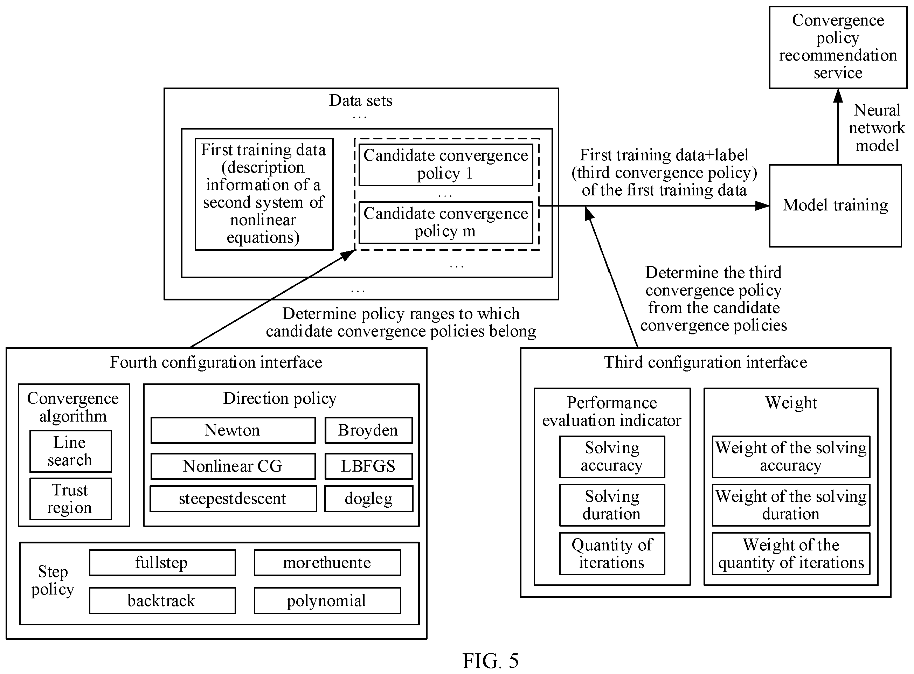

In the example shown in FIG. 5, the compute device cluster may provide a third configuration interface. A plurality of candidate evaluation indicators are displayed on the third configuration interface. The user may determine one or more performance evaluation indicators from the plurality of candidate evaluation indicators through the third configuration interface, and may further determine a weight corresponding to each performance evaluation indicator.

In this way, the third convergence policy in the label of the first training data may be determined from the plurality of groups of candidate convergence policies corresponding to the first training data based on the third configuration information input by the user and the performance parameter information of each group of candidate convergence policies corresponding to the first training data.

The performance evaluation indicator is used to evaluate solving performance of a candidate convergence policy.

There may be one or more performance evaluation indicators, and a quantity of performance evaluation indicators is not limited herein.

In addition, specific content of the performance evaluation indicator is not limited herein.

For example, the performance evaluation indicator in the third configuration information may include one or more of the following evaluation indicators:
solving accuracy, solving duration, and a quantity of iterations.

In this way, the user may flexibly adjust, based on an actual application scenario requirement by configuring a performance evaluation indicator or including the performance evaluation indicator and a weight corresponding to each performance evaluation indicator, an optimal convergence policy needed in a current scenario, so that a convergence policy recommendation manner learned by a trained neural network model can meet a current scenario requirement.

For example, the candidate convergence policy corresponding to the first training data includes a convergence acceleration method and a global convergence method.

The convergence acceleration method is intended to accelerate a convergence speed of iteration. For example, according to an Aitken acceleration method in the convergence acceleration method, linear interpolation is performed on an iteration sequence, to improve a convergence speed. It can be learned that a solving speed of the convergence acceleration method is fast.

The global convergence method ensures that a solution of a system of equations is found near a proper initial point. For example, a Broyden method and an Anderson hybrid method in the global convergence method are for global convergence. It can be learned that solving accuracy of the global convergence method is high.

If there is a high requirement on solving accuracy in a current scenario, it may be determined that the performance evaluation indicator includes the solving accuracy, and a weight corresponding to the performance evaluation indicator of the solving accuracy may be further set to be large. The third convergence policy determined based on the performance evaluation indicator and the corresponding weight is a convergence policy with high solving accuracy, for example, may be the foregoing global convergence method, so that a convergence policy recommendation manner that can be learned by the trained neural network model is recommending a convergence policy with high solving accuracy.

While if there is a high requirement on a solving speed in a current scenario, it may be determined that the performance evaluation indicator includes the solving duration, and a weight corresponding to the performance evaluation indicator of the solving duration may be further set to be large. In this case, the third convergence policy is a convergence policy with a fast solving speed, for example, may be the global convergence method, so that a convergence policy recommendation manner that can be learned by the trained neural network model is recommending a convergence policy with short solving duration (namely, a fast solving speed).

In addition, in some embodiments, the user may further configure a policy range to which each candidate convergence policy belongs. In other words, a candidate convergence policy corresponding to second training data is limited within a specified range, that is, a second convergence policy in a label of the second training data is limited within the specified range. Therefore, a convergence policy recommendation manner that can be learned by the trained neural network model is limited within a specified range, so that a convergence policy output by the neural network model can be executed in an inference phase.

Specifically, the method further includes:
receiving fourth configuration information input by the user, where the fourth configuration information indicates a policy range to which the candidate convergence policy belongs, and the policy range includes or more of the following: one or more convergence algorithms, one or more step policies, and one or more direction policies; and
obtaining, based on the fourth configuration information, a plurality of groups of candidate convergence policies corresponding to each piece of first training data.

In this embodiment of this application, each piece of first training data corresponds to a plurality of groups of preset convergence policies. The user may select a candidate convergence policy from the plurality of groups of preset convergence policies by configuring a policy range to which the candidate convergence policy belongs, to limit the candidate convergence policy corresponding to the second training data within the specified range, that is, limit the second convergence policy in the label of the second training data within the specified range.

The policy range to which the candidate convergence policy belongs may be determined based on a possible policy dimension of the candidate convergence policy.

For example, the candidate convergence policy includes one or more of the following policies:
a convergence algorithm, a step policy, and a direction policy.

For example, the convergence algorithm may be a line search algorithm or a trust region algorithm.

The direction policy determines which direction is selected for update in an iteration process. For example, during solving of a system of nonlinear equations, one or more of the following direction policies may be used:
a Newton (newton) method direction, where a direction is selected through linearization based on an inverse matrix of the Jacobian matrix;
a gradient descent direction, where an approximate solution is updated based on a gradient direction of a target function; and
a conjugation gradient direction, where the conjugation gradient direction is used for a quadratic optimization problem, and a solution is updated through a series of conjugate directions.

Certainly, the direction policy may also be not limited to the foregoing policies. For example, the direction policy may alternatively be a memory-limited Broyden-Fletcher-Goldfard-Shanno (LBFGS) algorithm, a steepest descent method (steepestdescent), or a dog leg method (dogleg).

The step policy may be an adaptive step policy, so that a step may be automatically adjusted based on a situation in an iteration process. An adaptive step may increase a convergence speed and avoid an excessively large or small step.

The user may configure a selectable range of the candidate convergence policy in the one or more policy dimensions, to limit the candidate convergence policy corresponding to the second training data within the specified range, that is, limit the second convergence policy in the label of the second training data within the specified range (for example, a range of a convergence policy that can be executed by the nonlinear iterative solving service), so that the convergence policy recommendation manner that can be learned by the trained neural network model is limited within the specified range, and the convergence policy output by the neural network model can be executed.

A policy range that can be configured for the candidate convergence policy in each policy dimension is not limited herein.

In the example shown in FIG. 5, the compute device cluster may provide a fourth configuration interface. The fourth configuration interface displays policy ranges that can be configured for a candidate convergence policy in three policy dimensions: the convergence algorithm, the step policy, and the direction policy.

As shown in FIG. 5, in the fourth configuration interface, the ranges that can be configured for the candidate convergence policy in the three policy dimensions: the convergence algorithm, the step policy, and the direction policy are respectively as follows.
1. Configurable range of the convergence algorithm:
   a line search algorithm and a trust region algorithm.
2. Configurable range of the direction policy:
   a Newton (newton) algorithm, a Broyden algorithm (a type of a quasi-Newton method), a nonlinear conjugate gradient (nonlinear conjugate gradient, nonlinear CG) descent method, an LBFGS algorithm, steepestdescent, and dogleg.
3. Configurable range of the step policy:
   a fullstep (fullstep) policy, a morethuente policy, a backtrack (backtrack) method, and a polynomial (polynomial) algorithm.

The user may consider a convergence policy that can be executed in the current nonlinear iterative solving service, to determine, through the fourth configuration interface from the configurable ranges in the three policy dimensions, the policy range to which the candidate convergence policy belongs.

The user may select, from the configurable ranges in the fourth configuration interface, the policy range to which the candidate convergence policy belongs. For example, the user may select that a policy range to which the convergence algorithm of the candidate convergence policy belongs is the trust region, a policy range to which the direction policy belongs is the Newton method, the Broyden algorithm, and the nonlinear CG, and a policy range to which the step policy belongs is backtrack and polynomial.

Then, a candidate convergence policy of the corresponding first training data may be determined based on a policy range to which the candidate convergence policy configured by the user belongs, for example, a candidate convergence policy 1 to a candidate convergence policy m in the example shown in FIG. 5.

2: Preprocess training data of the data set.

A manner of the preprocessing is not limited herein. For example, the preprocessing may include one or more of the following manners:
data cleaning, data integration (for example, a plurality of data sources are combined into one data set), data conversion (for example, operations such as standardization, normalization, and discretization on data), data specification (which can be implemented through clustering, sampling, feature extraction, and the like), and feature engineering.

3: Classify the data set into a training set and a verification set.

4: Train one or more to-be-trained models based on the training set, to obtain one or more trained models.

When there are a plurality of to-be-trained models, types and structures of different to-be-trained models may be the same, similar, or different.

In the training process, parameters of the to-be-trained models in the training process may be updated based on a loss function.

The loss function is used to evaluate a difference between a convergence policy output by the to-be-trained model in the training process and the third convergence policy in the label of the corresponding first training data.

A specific form of the loss function is not limited herein. For example, the loss function may be a cross entropy function or the like.

In this way, one or more trained models may be obtained based on the training set and the loss function.

5: Verify the one or more trained models by using the verification set, and select an optimal model as the neural network model.

6: Deploy the obtained neural network model in the compute device cluster.

As shown in FIG. 5, after the to-be-trained model is trained and verified based on the first training data, the label corresponding to the first training data, and the specified loss function, the neural network model may be obtained, and the neural network model may be applied to the convergence policy recommendation service.

After the obtained neural network model is deployed in the compute device cluster, the description information of the i^{th} iteration may be processed through the neural network model, to obtain the at least one first convergence policy of the i^{th} iteration.

The description information of the i^{th} iteration may be input into the neural network model after undergoing the preprocessing such as the data conversion and/or the feature engineering, and then the first convergence policy of the i^{th} iteration is output through the neural network model.

There may be one or more groups of first convergence policies, and a quantity of first convergence policies is not limited herein.

In some examples, an output result of the neural network model includes a plurality of groups of convergence policies and confidence corresponding to each group of convergence policies. A group of convergence policies with highest confidence may be obtained from the output result of the neural network model as the first convergence policy; or N groups of convergence policies with highest confidence may be obtained from the output result of the neural network model as N groups of first convergence policies, where N may be a positive integer greater than 1.

Step 404: Determine the target convergence policy according to the at least one first convergence policy, and solve the first system of nonlinear equations through the i^{th} iteration according to the target convergence policy, to obtain a target solution of the first system of nonlinear equations.

The target convergence policy may include a convergence policy in one or more policy dimensions.

In some embodiments, the target convergence policy includes one or more of the following policies:
a convergence algorithm, a step policy, and a direction policy.

The convergence algorithm, the step policy, and the direction policy may be existing policies or subsequently developed policies respectively. This is not limited herein.

For example, in the target convergence policy, the convergence algorithm may be a line search algorithm or a trust region algorithm; the direction policy may be a Newton method, a quasi-Newton method (for example, a Broyden algorithm), nonlinear CG, an LBFGS, steepestdescent, or dogleg; and the step policy may be fullstep, morethuente, backtrack, or polynomial.

It can be learned that the target convergence policy may include a policy of one aspect, or may include a policy combination of a plurality of aspects, so that a better iterative search path in a solving process of a system of nonlinear equations is determined from one or more aspects, thereby improving iteration performance.

In this way, the first system of nonlinear equations is solved through the i^{th} iteration according to the target convergence policy, so that the first system of nonlinear equations converges in an iteration process, and the target solution of the first system of nonlinear equations is obtained.

The target solution may be considered as a solution obtained in an i^{th} iteration process of the first system of nonlinear equations, or may be considered as a solving result obtained by solving the first system of nonlinear equations according to a nonlinear iteration method.

In this embodiment of this application, during the i^{th} iteration of the first system of nonlinear equations, the neural network model can identify, based on the input description information of the i^{th} iteration, the system of equations feature information such as a feature of the first system of nonlinear equations and a feature of a current iteration parameter of the first system of nonlinear equations during the i^{th} iteration, to efficiently determine the first convergence policy that is appropriate for the first system of nonlinear equations in the current iteration process. In this way, the target convergence policy is determined according to the first convergence policy, and the first system of nonlinear equations is iteratively solved efficiently and accurately according to the target convergence policy, so that performance of iterative solving on a system of nonlinear equations is improved (for example, a solving speed is improved and solving time consumption is reduced), and a generalization problem caused by a convergence policy determined based on expert experience and according to a default convergence policy is avoided, thereby resolving a problem that a convergence policy determined in different scenarios has a poor effect and is difficult to converge when a system of nonlinear equations is solved.

In this embodiment of this application, after the first convergence policy is obtained, the first convergence policy may be used as the target convergence policy of the i^{th} iteration of the first system of nonlinear equations, and the first system of nonlinear equations is solved through the i^{th} iteration, to obtain a solving result of the i^{th} iteration. Alternatively, after the first convergence policy is obtained, a better target convergence policy may be further queried according to the first convergence policy, and the first system of nonlinear equations is solved through the i^{th} iteration according to the better target convergence policy, to obtain a solving result.

In this example, a functional module that implements the convergence policy selection process in the compute device cluster is referred to as a convergence policy optimization module.

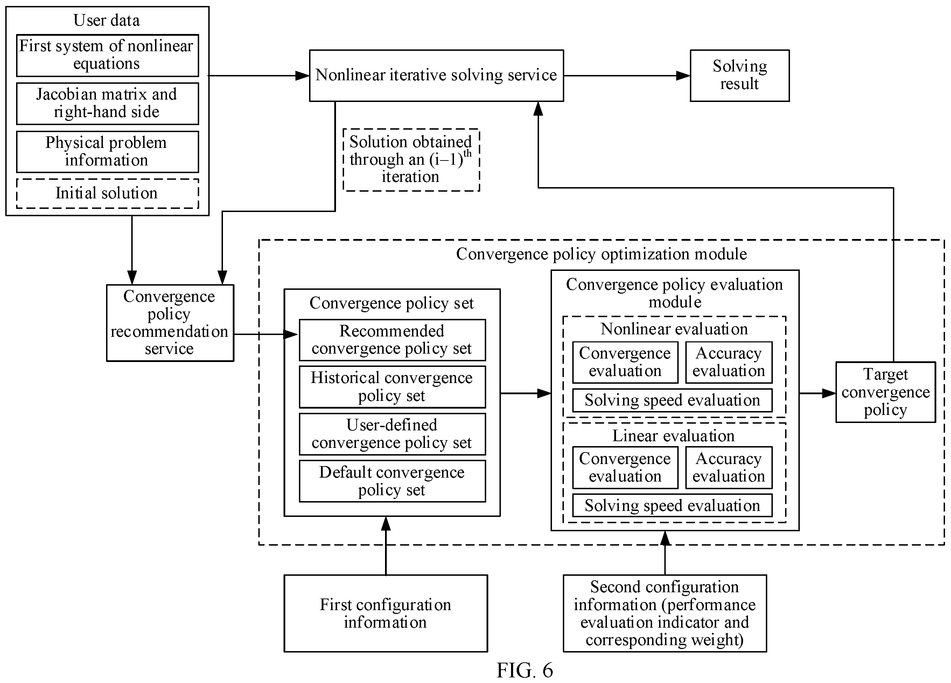

FIG. 6 is an example diagram of iteratively solving a first system of nonlinear equations through a convergence policy optimization module.

The convergence policy recommendation service may obtain the description information of the first system of nonlinear equations from user data and/or the nonlinear iterative solving service. When a value of i is 1, it indicates that the first system of nonlinear equations has not been iteratively solved. In this case, the description information may include an initial solution. When i is greater than 1, the description information may include a solution obtained by the nonlinear iterative solving service through an (i-1)^{th} iteration. The convergence recommendation service may obtain the first convergence policy based on the description information of the first system of nonlinear equations through the neural network model, and then may query a better target convergence policy according to the first convergence policy through the convergence policy optimization module.

The following uses the convergence policy optimization module in FIG. 6 as an example to describe a further convergence policy selection process after the first convergence policy is obtained. In an actual implementation process, the convergence policy optimization module may be implemented by using one or more cloud services of the cloud management platform. This is not limited in this embodiment of this application.

Specifically, the convergence policy selection process may include one or a combination of the following steps.
1: Obtain a convergence policy set, to select a target convergence policy from the convergence policy set.

In some embodiments, step 404 includes:
obtaining first configuration information, where the first configuration information indicates to use a recommended convergence policy set and/or at least one of a historical convergence policy set, a user-defined convergence policy set, and a default convergence policy set as convergence policy sets/a convergence policy set, the recommended convergence policy set includes the at least one first convergence policy, and at least one of the historical convergence policy set, the user-defined convergence policy set, and the default convergence policy set includes at least one second convergence policy;
determining a plurality of convergence policies of the i^{th} iteration based on the first configuration information, where the plurality of convergence policies include the at least one first convergence policy and/or the at least one second convergence policy;
selecting the target convergence policy from the plurality of convergence policies; and
solving the first system of nonlinear equations through the i^{th} iteration according to the target convergence policy, to obtain the target solution of the first system of nonlinear equations.

In this embodiment of this application, the cloud management platform may provide a first configuration interface, and a plurality of candidate convergence policy sets are displayed on the first configuration interface. The user may select one or more convergence policy sets from the first configuration interface and confirm the one or more convergence policy sets. In this way, the user may input the first configuration information into the cloud management platform, that is, the first configuration information is configured and input by the user.

Alternatively, in the cloud management platform, a developer may preconfigure, based on expert experience and the like, a plurality of candidate convergence policy sets in a cloud service provided for the user. In other words, in this example, the first configuration information may be preconfigured by the developer in the related cloud service.

Specific content of the convergence policy set is not limited herein.

For example, in the example shown in FIG. 6, the convergence policy set may include one or more of the following:

### (1) Recommended convergence policy set

The recommended convergence policy set includes the at least one first convergence policy generated in step 401 to step 403.

### (2) Historical convergence policy set

For example, the historical convergence policy set includes at least one convergence policy of a historical iteration (for example, an (i-1)^{th} iteration) of the first system of nonlinear equations, where the at least one convergence policy is used as the second convergence policy.

### (3) User-defined convergence policy set

The user-defined convergence policy set includes one or more convergence policies input by the user, where the one or more convergence policies are used as the second convergence policy.

### (4) Default convergence policy set

The default convergence policy set includes one or more default convergence policies in the convergence policy optimization module, where the one or more convergence policies are used as the second convergence policy.

In other words, the recommended convergence policy set includes the at least one first convergence policy, and at least one of the historical convergence policy set, the user-defined convergence policy set, and the default convergence policy set includes the at least one second convergence policy.

In this embodiment of this application, considering that different convergence policies are applicable to different application scenarios, for example, are applicable to physical problems in different physical scenarios, the plurality of convergence policies may be provided based on the first configuration information. In this way, adaptation degrees of different convergence policies in different application scenarios (for example, different physical problems) may be fully considered, for selecting a more appropriate target convergence policy in a current scenario from the plurality of convergence policies, thereby improving quality of the finally obtained target convergence policy, and further improving solving performance of an iterative solving process of the first system of nonlinear equations.

2: Select the target convergence policy from a plurality of convergence policies.

In some embodiments, selecting the target convergence policy from the plurality of convergence policies includes:
obtaining second configuration information, where the second configuration information includes a performance evaluation indicator, or includes the performance evaluation indicator and a weight corresponding to each performance evaluation indicator; and
selecting the target convergence policy from the plurality of convergence policies based on the second configuration information and performance parameter information of each of the plurality of convergence policies.

In some examples, the cloud management platform may provide a second configuration interface, and a plurality of preset evaluation indicators are displayed on the second configuration interface. The user may select at least one evaluation indicator from the second configuration interface and determine the at least one evaluation indicator as a performance evaluation indicator. In this way, the user may input the second configuration information into the cloud management platform, that is, the second configuration information is configured by the user.

In this example, the user may flexibly configure the performance evaluation indicator based on a current scenario requirement through the second configuration interface, to determine, based on the configured performance evaluation indicator, a target convergence policy that meets the current scenario requirement.

In some other examples, in the cloud management platform, a developer may preconfigure, based on expert experience and the like, a performance evaluation indicator in a cloud service provided for the user. In other words, in this example, the second configuration information may be preconfigured by the developer in the related cloud service.

The second configuration information may carry an identifier of the performance evaluation indicator, or may carry content of the performance evaluation indicator, for example, carry a specific evaluation manner (for example, a related evaluation formula) of the evaluation indicator.

A quantity and a type of performance evaluation indicators are not limited herein.

In the example shown in FIG. 6, the performance evaluation indicator may include nonlinear evaluation and/or linear evaluation. The nonlinear evaluation includes one or more of convergence evaluation, solving speed evaluation, or accuracy evaluation, and/or the linear evaluation includes one or more of convergence evaluation, solving speed evaluation, or accuracy evaluation.

The following separately describes possible types of the performance evaluation indicator by using examples.

In some examples, the performance evaluation indicator may include one or more performance indicators, for example, one or more of convergence evaluation, solving speed evaluation, or accuracy evaluation.

In this example, each performance indicator may be evaluated based on performance parameter information of each of the plurality of convergence policies.

The performance parameter information of each convergence policy indicates solving performance of a corresponding convergence policy used in a solving process of the first system of nonlinear equations.

For example, the performance parameter information of each convergence policy may include corresponding solving accuracy, corresponding solving duration, a corresponding quantity of iterations, and the like.

A specific manner of obtaining the performance parameter information of each convergence policy is not limited herein.

For example, for the first convergence policy, performance parameter information of the first convergence policy is used to describe performance of a solution of an (i-1)^{th} iteration, for example, may describe accuracy of the solution of the (i-1)^{th} iteration, a solving speed, and/or a current quantity of iterations. For example, a performance parameter of the solution obtained through the (i-1)^{th} iteration may include one or more of the following parameters: an error of the solution obtained through the (i-1)^{th} iteration, solving duration of the (i-1)^{th} iteration, and a value of i (used to reflect the current quantity of iterations).

For the second convergence policy (for example, a convergence policy preconfigured by the user or a default convergence policy) in the plurality of convergence policies of the i^{th} iteration, performance parameter information of another convergence policy may be obtained in advance through experience, a test, or the like, or may be obtained through derivation according to the second convergence policy and based on related information (for example, a related system of iteration equations) of the first system of nonlinear equations.

The following describes each performance indicator by using an example.

### 1. Convergence evaluation

The convergence evaluation is a property that a result solved according to a numerical method approaches to a real solution when a discretization step is close to zero. If a numerical solution obtained according to the numerical method converges to the real solution when the step is small enough, and a convergence speed meets expectations, it can be considered that the numerical method has better convergence.

There are two common specific manners of convergence evaluation: a convergence theory and a convergence test. The convergence theory is to deduce error estimation and a convergence speed of the numerical method by analyzing a discretization error and a truncation error of the numerical method. The convergence test is to analyze a difference between the numerical solution and the real solution by comparing a solving result of the numerical method under the discretization step with the real solution.

In a process of solving the first system of nonlinear equations, a used numerical method is a nonlinear iteration method. In this case, convergence evaluation may be performed by using parameters such as an error of a solution and/or a value of i (describing a current iteration step) that are in a performance parameter of the i^{th} iteration.

For the first convergence policy, an error in the performance parameter of the i^{th} iteration may be an error of a solution obtained through the (i-1)^{th} iteration (when i is greater than 1), or an error of an initial solution of the first system of nonlinear equations (when i is 1). A performance parameter like an error of the second convergence policy in the plurality of convergence policies may be collected based on a pre-test and included in the second configuration information, or may be obtained by performing theoretical deduction according to a corresponding convergence policy and based on the first system of nonlinear equations, and the like.

### 2. Solving speed evaluation

The solving speed evaluation is used to evaluate solving duration when iterative solving is performed according to each of the plurality of convergence policies.

Specifically, solving speed evaluation may be performed by using parameters such as solving duration in the performance parameter of the i^{th} iteration.

For the first convergence policy, when i is 1, the current solution of the i^{th} iteration is an initial solution obtained by solving the first system of nonlinear equations. In this case, the performance parameter of the i^{th} iteration does not include the solving duration. Therefore, solving speed evaluation cannot be performed. When i is greater than 1, the solving duration in the performance parameter of the i^{th} iteration may be solving duration of the (i-1)^{th} iteration. A performance parameter like solving duration of the second convergence policy in the plurality of convergence policies may be collected based on a pre-test and included in the second configuration information, or may be obtained by performing theoretical deduction according to a corresponding convergence policy and based on the first system of nonlinear equations, and the like.

### 3. Accuracy evaluation

The accuracy evaluation is used to evaluate accuracy of a solving result obtained by performing iterative solving according to each of the plurality of convergence policies.

The accuracy may describe a difference between the solving result of the iterative solving and an accurate solution.

Specifically, accuracy evaluation may be performed by using a parameter like an error in the performance parameter of the i^{th} iteration.

For the first convergence policy, the error in the performance parameter of the i^{th} iteration may be an error of the (i-1)^{th} iteration. A performance parameter like an error of the second convergence policy in the plurality of convergence policies may be collected based on a pre-test and included in the second configuration information, or may be obtained by performing theoretical deduction according to a corresponding convergence policy and based on the first system of nonlinear equations, and the like.

In some examples, the performance evaluation indicator may be evaluated from one or more of the following two aspects: non-linearity and linearity.

In this example, the performance evaluation indicator includes one or more of the following:
nonlinear evaluation and/or linear evaluation.

The following separately provides descriptions.

### 1. Nonlinear evaluation

The nonlinear evaluation is performed based on the first system of nonlinear equations and the performance parameter information of each of the plurality of convergence policies.

The nonlinear evaluation may specifically include one or more performance indicators. In other words, the nonlinear evaluation may be performed on one or more performance based on one or more performance parameters.

The performance parameter information of each convergence policy indicates solving performance of a corresponding convergence policy used in a solving process of the first system of nonlinear equations.

For example, the performance parameter information of each convergence policy may include corresponding solving accuracy, corresponding solving duration, a corresponding quantity of iterations, and the like.

In some examples, the nonlinear evaluation specifically includes one or more of the following performance indicators:
convergence evaluation, solving speed evaluation, and accuracy evaluation.

The convergence evaluation, the solving speed evaluation, and/or the accuracy evaluation may be performed based on the first system of nonlinear equations.

For example, the convergence evaluation and/or the accuracy evaluation may be performed based on a difference between a real solution of the first system of nonlinear equations and a solution in the performance parameter information of each of the plurality of convergence policies of the i^{th} iteration.

### 2. Linear evaluation

The linear evaluation is performed based on the system of iteration equations corresponding to the first system of nonlinear equations and the performance parameter information of each of the plurality of convergence policies.

The linear evaluation may specifically include one or more performance indicators. In other words, the linear evaluation may be performed on one or more performance based on one or more performance parameters.

In some examples, the linear evaluation specifically includes one or more of the following performance indicators:
convergence evaluation, solving speed evaluation, and accuracy evaluation.

The convergence evaluation, the solving speed evaluation, and/or the accuracy evaluation may be performed based on a system of linear equations.

For example, the convergence evaluation and/or the accuracy evaluation may be performed based on a difference between a numerical solution of the system of linear equations and a solution in the performance parameter information of each of the plurality of convergence policies of the i^{th} iteration.

It can be learned that in this example, the user can flexibly set, from a nonlinear evaluation dimension and/or a linear evaluation dimension, a target convergence policy selection manner based on an actual scenario requirement, to select, from the plurality of convergence policies of the i^{th} iteration, a target convergence policy that meets the current scenario requirement and that has good iteration performance, and can transmit the target convergence policy to the nonlinear iterative solving service, to solve the first system of nonlinear equations through the i^{th} iteration.

In this embodiment of this application, the weight corresponding to each performance evaluation indicator may be configured by the user, or may be preconfigured by a developer or the like.

It may be understood that any performance evaluation indicator may be used to evaluate iteration performance of a corresponding convergence policy used as a convergence policy of the i^{th} iteration. A user can flexibly configure a performance evaluation indicator based on an actual scenario requirement (for example, in some examples, a plurality of performance evaluation indicators can be flexibly set from a plurality of dimensions, to perform convergence policy selection from the plurality of dimensions), to flexibly set a target convergence policy selection manner. In this way, a corresponding target convergence policy with good iteration performance can be selected from the plurality of convergence policies of the i^{th} iteration based on information such as a performance evaluation indicator and a related weight. Therefore, the first system of nonlinear equations may be solved through the i^{th} iteration according to the target convergence policy.

According to the method for solving a system of nonlinear equations in any one of the foregoing embodiments, the first system of nonlinear equations may be solved through a plurality of iterations until an iteration termination condition is met, for example, until a quantity of iterations reaches a specified quantity threshold, or until a solving result of the iterative solving converges to a specified condition, so that a target solving result of the first system of nonlinear equations may be obtained and output.

In addition, in some embodiments, after the first system of nonlinear equations is solved through the plurality of iterations according to the method for solving a system of nonlinear equations in any one of the foregoing embodiments, to obtain the target solution of the first system of nonlinear equations, the neural network model can be further optimized based on related data in the solving process, to improve performance of the neural network model, so that the neural network model can better adapt to an actual application scenario requirement.

Specifically, in some embodiments, the method further includes:
generating second training data and a label of the second training data, where the second training data includes the description information of the i^{th} iteration, and the label of the second training data includes the target convergence policy; and
training the neural network model based on the second training data, to obtain an optimized neural network model.

In some examples, the second training data may be added to the data set as training data for retraining of the neural network model.

In this embodiment of this application, target convergence policies corresponding to different systems of nonlinear equations may be continuously collected in an inference process. In addition, in some examples, related performance data of an actual iterative solving result may be further obtained, so that whether a corresponding target convergence policy is an appropriate convergence policy can be well determined, and corresponding second training data may be generated.

Then, the neural network model may be trained based on the second training data to obtain an optimized neural network model, and the method for solving a system of nonlinear equations is subsequently performed based on the optimized neural network model.

In this way, the neural network model can be continuously iteratively updated with a change of user data distribution and a user data scale in an actual application scenario for continuous optimization, so that the optimized neural network model more adapts to a current scenario requirement, and can generate better target convergence policies for iteration processes of systems of nonlinear equations in different scenarios, thereby improving solving performance.

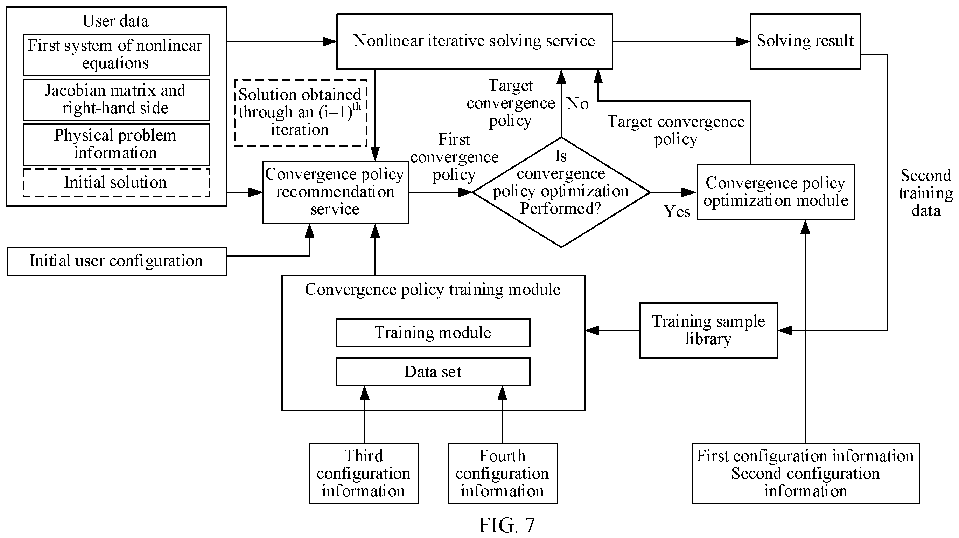

FIG. 7 is an example diagram of a processing procedure according to an embodiment of this application.

Before the first system of nonlinear equations is iteratively solved, each piece of first training data and a corresponding label in a data set may be obtained based on the third configuration information and the fourth configuration information, the label may be a better convergence policy that is flexibly determined based on the third configuration information and the fourth configuration information and that meets a current scenario requirement.

Then, a to-be-trained model may be trained based on the data set through a training module, and a neural network model is obtained after the training is completed. The neural network model may be used for a convergence policy recommendation service.

In this example, the convergence policy recommendation service may be enabled based on an initial user configuration.

When solving the first system of nonlinear equations through the i^{th} iteration, the convergence policy recommendation service may obtain description information of the first system of nonlinear equations from user data and/or a nonlinear iterative solving service, for example, obtain a system of nonlinear equations from a numerical calculation solving service and obtain iteration parameter information (at least one of a Jacobian matrix of an i^{th} iteration, a right-hand side of the i^{th} iteration, and a current solution of the i^{th} iteration) from the nonlinear iterative solving service. When a value of i is 1, it indicates that the first system of nonlinear equations has not been iteratively solved. In this case, the current solution of the i^{th} iteration in the description information may be an initial solution. When i is greater than 1, the current solution of the i^{th} iteration in the description information may be a solution obtained by the nonlinear iterative solving service through an (i-1)^{th} iteration.

The convergence recommendation service may obtain a first convergence policy based on the description information of the first system of nonlinear equations through a neural network model provided by a convergence policy training module, and then may use the first convergence policy as a target convergence policy, or may query a better target convergence policy according to the first convergence policy through a convergence policy optimization module.

An optimization manner of the convergence policy optimization module may be determined based on the first configuration information and the second configuration information that are input by the user, convergence policy optimization is performed through the convergence policy optimization module, to obtain the target convergence policy, and the target convergence policy is transferred to the nonlinear iterative solving service, so as to solve the first system of nonlinear equations through the i^{th} iteration to obtain a solving result. The final solving result may be a target solution.

In addition, in this example, second training data may be further obtained according to the target convergence policy, corresponding performance parameter information, the description information of the i^{th} iteration, and the like. Therefore, the neural network model is trained based on the second training data to obtain an optimized neural network model, so that the neural network model can be continuously iteratively updated with a change of user data distribution and a user data scale in an actual application scenario, and then a method for solving a system of nonlinear equations is subsequently performed based on the updated neural network model.

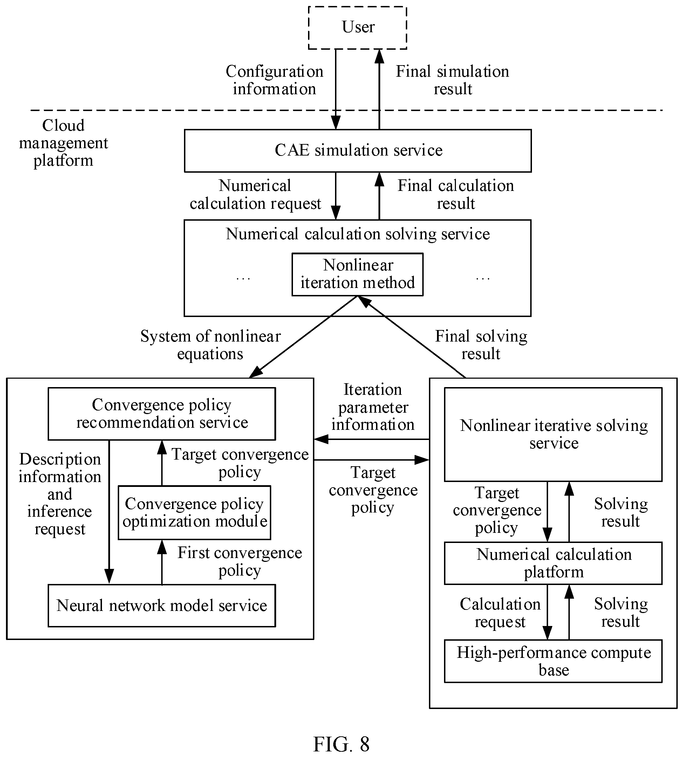

It can be learned that, based on the descriptions of the foregoing embodiments, an example specific implementation of the convergence policy recommendation service and the nonlinear iterative solving service shown in FIG. 3 is shown in FIG. 8.

In the example shown in FIG. 8, after obtaining description information of an i^{th} iteration of a to-be-solved system of nonlinear equations (for example, a first system of nonlinear equations), a convergence policy recommendation service may invoke, by using an inference request, a neural network model in a neural network model service to process the description information, to obtain a first convergence policy. Then, a convergence policy optimization module may select a target convergence policy from a convergence policy set including the first convergence policy. Then, the convergence policy recommendation service may send the target convergence policy to a nonlinear iterative solving service, so that the nonlinear iterative solving service invokes a resource of a high-performance compute base through a data computing platform to solve the system of nonlinear equations through the i^{th} iteration according to the target convergence policy, to obtain a solving result of the i^{th} iteration. After a plurality of iterations are performed based on the foregoing process and an iteration termination condition is reached, the nonlinear iterative solving service may obtain a final solving result of the to-be-solved system of nonlinear equations, and feed back the final solving result to a numerical calculation solving service, so that a CAE simulation service can execute a simulation task based on the final solving result.

The following describes, by using an example, a specific application process of the method for solving a system of nonlinear equations in this embodiment of this application in the engineering field.

In an example, electromagnetic performance optimization simulation of a solenoid valve needs to be implemented. The electromagnetic performance optimization simulation of the solenoid valve is two-dimensional low-frequency electromagnetic nonlinear simulation.

The solenoid valve is an axisymmetric model. Solving and calculation may be performed by using a two-dimensional axisymmetric computer model. Through solving, core electromagnetic performance parameters such as a magnetic density, a current density, a loss, a current, a voltage, an inductance, a back electromotive force, corresponding time, a response acceleration, and a valve core (plunger) electromagnetic force may be obtained, to comprehensively evaluate, analyze, design, and optimize electromagnetic performance of the solenoid valve.

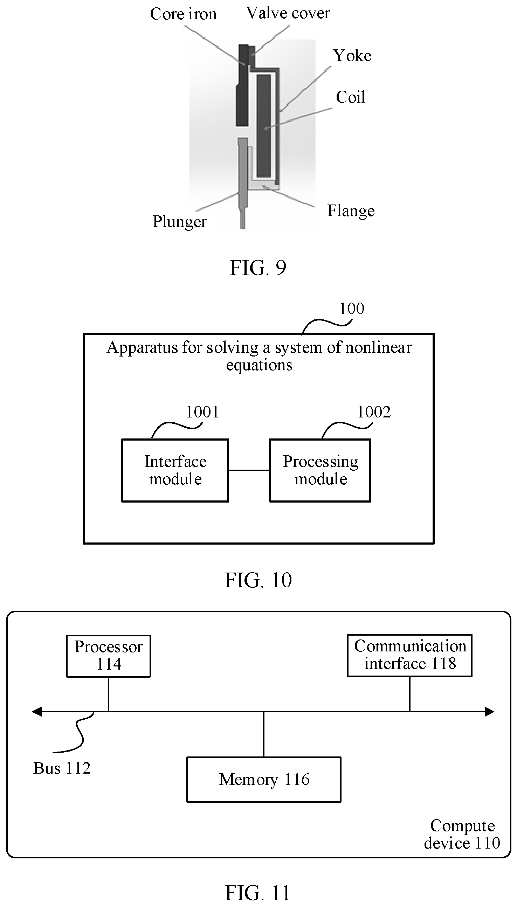

FIG. 9 is a diagram of an example of a two-dimensional axisymmetric computer model of a solenoid valve.

Based on the computer model, electromagnetic performance optimization simulation of electromagnetic simulation of the solenoid valve may be solved. In this scenario, a system of nonlinear equations may be obtained based on a to-be-solved physical problem, and a system of iteration equations of the system of nonlinear equations may be constructed by using a Newton iteration method for iterative solving. The system of iteration equations includes a Jacobian matrix and a right-hand side.

In this case, a first convergence policy in each step of nonlinear iteration process may be obtained through a neural network model.

The neural network model may be trained in advance based on a pre-collected data set. The data set includes training data in an electromagnetic performance optimization simulation scenario of the solenoid valve and a label corresponding to the training data. The label includes an optimal convergence policy corresponding to the training data. The optimal convergence policy may be determined by a user from a plurality of candidate convergence policies corresponding to the training data based on a preset performance evaluation indicator and a weight corresponding to the preset performance evaluation indicator. In addition, the training data in the electromagnetic performance optimization simulation scenario of the solenoid valve includes description information of a system of nonlinear equations in the electromagnetic performance optimization simulation scenario of the solenoid valve, for example, includes physical problem information corresponding to the system of nonlinear equations, the system of nonlinear equations, information about a Jacobian matrix and a right-hand side that are of a system of iteration equations corresponding to the system of nonlinear equations, and an initial solution of the system of nonlinear equations.

Therefore, the neural network model obtained through training by using the data set has a capability of providing an appropriate first convergence policy for an iteration process of the system of nonlinear equations in the electromagnetic performance optimization simulation scenario of the solenoid valve.

In this way, in an inference process, in each iteration process of a to-be-solved system of nonlinear equations, a convergence policy recommendation service may obtain description information in the current iteration process. The description information may include physical problem information corresponding to the system of nonlinear equations, the system of nonlinear equations, information about a Jacobian matrix and a right-hand side that are of a system of iteration equations corresponding to the system of nonlinear equations, a solution obtained in a previous iteration, and the like.

After the description information is obtained, the description information is input into the neural network model, to obtain a first convergence policy of the current iteration.

Then, an optimal convergence policy may be determined, through a convergence policy optimization service and based on one or more performance evaluation indicators (for example, nonlinear evaluation and/or linear evaluation) determined by a user, from a plurality of policies including the first convergence policy, as a target convergence policy.

Then, the convergence policy recommendation service may transmit the target convergence policy to a nonlinear iterative solving service, so that the nonlinear iterative solving service solves the corresponding system of nonlinear equations through the i^{th} iteration according to the target convergence policy.

Based on the foregoing method, the nonlinear iterative solving service solves the system of nonlinear equations through a plurality of iterations until an iteration termination condition is met, to obtain a final solving result, and may return the final solving result to a CAE simulation service.

In an actual test of this example, two meshes with different encryption degrees may be generated for the two-dimensional axisymmetric computer model of the solenoid valve, which are respectively:
Mesh 1: 19917 second-order triangular elements and 39558 unknowns; and
Mesh 2: 5692 second-order triangular elements and 5404 unknowns.

Systems of nonlinear equations are respectively solved for the two mesh cases. In a solving process, a comparison test is performed on whether the foregoing convergence policy recommendation is used.

Test results are shown in Table 1 and Table 2.

**Table 1: Solving result of Mesh 1**

| Whether to use a convergence policy recommendation service | Quantity of iterations | Solving duration (s) |
|---|---|---|
| No | - | Expire |
| Yes | 27 | 146.86 |

**Table 2: Solving result of Mesh 2**

| Whether to use a convergence policy recommendation service | Quantity of iterations | Solving duration (s) |
|---|---|---|
| No | - | Expire |
| Yes | 4 | 11 |

It can be learned that, for the two mesh division cases of Mesh 1 and Mesh 2, the nonlinear iterative solving service can obtain a final solution through convergence only when the convergence policy recommendation service is used. If the convergence policy recommendation service is not used, the nonlinear iterative solving service expires. Therefore, in this example, determining a convergence policy in an iteration process according to any one of the foregoing embodiments to iteratively solve a system of nonlinear equations can significantly improve convergence efficiency and reduce time consumed for solving.

The foregoing describes the method for solving a system of nonlinear equations provided in embodiments of this application from a plurality of aspects. The following describes an apparatus for solving a system of nonlinear equations provided in embodiments of this application with reference to the accompanying drawings.

As shown in FIG. 10, an embodiment of this application provides an apparatus 100 for solving a system of nonlinear equations. The apparatus 100 for solving a system of nonlinear equations includes:
an interface module 1001, configured to obtain a first system of nonlinear equations; and
a processing module 1002, configured to:
   obtain, based on the first system of nonlinear equations, description information of an i^{th} iteration of the first system of nonlinear equations, where the description information of the i^{th} iteration is used to describe system of equations feature information of the first system of nonlinear equations during the i^{th} iteration, and i is a positive integer;
   perform inference on the description information of the i^{th} iteration of the first system of nonlinear equations through a neural network model, to obtain at least one first convergence policy of the i^{th} iteration; and
   determine a target convergence policy according to the at least one first convergence policy, and solve the first system of nonlinear equations through the i^{th} iteration according to the target convergence policy, to obtain a target solution of the first system of nonlinear equations.

Optionally, the description information of the i^{th} iteration includes at least one of the first system of nonlinear equations, a Jacobian matrix of the i^{th} iteration, a right-hand side of the i^{th} iteration, and a current solution of the i^{th} iteration.

Optionally, the target convergence policy includes one or more of the following policies:
a convergence algorithm, a step policy, and a direction policy.

Optionally, the description information further includes to-be-solved physical problem information, the first system of nonlinear equations is obtained by performing numerical simulation on the to-be-solved physical problem information, and the to-be-solved physical problem information includes at least one of the following:
a boundary condition, mesh information, and a physical equation.

Optionally, the interface module 1001 is configured to obtain first configuration information, where the first configuration information indicates to use a recommended convergence policy set and/or at least one of a historical convergence policy set, a user-defined convergence policy set, and a default convergence policy set as convergence policy sets/a convergence policy set, the recommended convergence policy set includes the at least one first convergence policy, and at least one of the historical convergence policy set, the user-defined convergence policy set, and the default convergence policy set includes at least one second convergence policy.

The processing module 1002 is configured to:
determine a plurality of convergence policies of the i^{th} iteration based on the first configuration information, where the plurality of convergence policies include the at least one first convergence policy and/or the at least one second convergence policy;
select the target convergence policy from the plurality of convergence policies; and
solve the first system of nonlinear equations through the i^{th} iteration according to the target convergence policy, to obtain the target solution of the first system of nonlinear equations.

Optionally, the interface module 1001 is configured to obtain second configuration information, where the second configuration information includes a performance evaluation indicator, or includes the performance evaluation indicator and a weight corresponding to each performance evaluation indicator.

The processing module 1002 is configured to select the target convergence policy from the plurality of convergence policies based on the second configuration information and performance parameter information of each of the plurality of convergence policies.

Optionally, the performance evaluation indicator includes one or more of the following:
nonlinear evaluation and/or linear evaluation.

The nonlinear evaluation is performed based on the first system of nonlinear equations and the performance parameter information of each of the plurality of convergence policies, and the linear evaluation is performed based on a system of iteration equations corresponding to the first system of nonlinear equations and the performance parameter information of each of the plurality of convergence policies.

The nonlinear evaluation includes one or more of the following: convergence evaluation, solving speed evaluation, and accuracy evaluation.

The linear evaluation includes one or more of the following: convergence evaluation, solving speed evaluation, and accuracy evaluation.

Optionally, the neural network model is obtained through training based on a data set, the data set includes first training data and a label of the first training data, the first training data includes description information of a second system of nonlinear equations, the description information of the second system of nonlinear equations is used to describe system of equations feature information of the second system of nonlinear equations in a historical iteration process, and the label of the first training data includes a third convergence policy corresponding to the second system of nonlinear equations.

Optionally, the first training data corresponds to a plurality of groups of candidate convergence policies and performance parameter information corresponding to each group of candidate convergence policies.

The interface module 1001 is configured to receive third configuration information input by a user, where the third configuration information includes a performance evaluation indicator, or includes the performance evaluation indicator and a weight corresponding to each performance evaluation indicator.

The processing module 1002 is configured to determine, based on the third configuration information and the performance parameter information of each group of candidate convergence policies corresponding to the first training data, the third convergence policy in the label of the first training data from the plurality of groups of candidate convergence policies corresponding to the first training data.

Optionally, the interface module 1001 is configured to receive fourth configuration information input by the user, where the fourth configuration information indicates a policy range to which the candidate convergence policy belong, and the policy range includes or more of the following: one or more convergence algorithms, one or more step policies, and one or more direction policies.

The processing module 1002 is configured to obtain, based on the fourth configuration information, a plurality of groups of candidate convergence policies corresponding to each piece of first training data.

Optionally, the processing module 1002 is configured to:
generate second training data and a label of the second training data, where the second training data includes the description information of the i^{th} iteration, and the label of the second training data includes the target convergence policy; and
train the neural network model based on the second training data, to obtain an optimized neural network model.

In this embodiment of this application, the module is used as an example of a software functional unit, and the apparatus for solving a system of nonlinear equations may include code running on a computing instance. The computing instance may be at least one of compute devices such as a physical host (compute device), a virtual machine, and a container. Further, there may be one or more compute devices. For example, the apparatus for solving a system of nonlinear equations may include code running on a plurality of hosts/virtual machines/containers. It should be noted that the plurality of hosts/virtual machines/containers configured to run the application may be distributed in a same region or may be distributed in different regions. The plurality of hosts/virtual machines/containers configured to run the code may be distributed in a same availability zone (availability zone, AZ), or may be distributed in different AZs. Each AZ includes one data center or a plurality of data centers with close geographical locations. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is set in one region. A communication gateway needs to be set in each VPC for communication between two VPCs in a same region or between VPCs in different regions. Interconnection between VPCs is implemented through the communication gateway.

The module is used as an example of a hardware functional unit, and the apparatus for solving a system of nonlinear equations may include at least one compute device such as a server. Alternatively, the apparatus for solving a system of nonlinear equations may be a device implemented by using an application specific integrated circuit (application specific integrated circuit, ASIC), a programmable logic device (programmable logic device, PLD), or the like. The PLD may be a complex PLD (complex PLD, CPLD), a field programmable gate array (field programmable gate array, FPGA), generic array logic (generic array logic, GAL), or any combination thereof.

A plurality of compute devices included in the apparatus for solving a system of nonlinear equations may be distributed in a same region, or may be distributed in different regions. A plurality of compute devices included in the apparatus for solving a system of nonlinear equations may be distributed in a same AZ, or may be distributed in different AZs. Similarly, a plurality of compute devices included in the apparatus for solving a system of nonlinear equations may be distributed in a same VPC, or may be distributed in a plurality of VPCs. The plurality of compute devices may be any combination of compute devices such as a server, an ASIC, a PLD, a CPLD, an FPGA, and GAL.

It should be noted that, in another embodiment, the interface module may be configured to perform any step in the method for solving a system of nonlinear equations, the processing module may be configured to perform any step in the method for solving a system of nonlinear equations, and steps that the interface module and the processing module are responsible for implementing may be specified as required. The interface module and the processing module separately implement different steps in the method for solving a system of nonlinear equations to implement all functions of the apparatus for solving a system of nonlinear equations.

An embodiment of this application further provides a compute device 110. As shown in FIG. 11, the compute device 110 includes a bus 112, a processor 114, a memory 116, and a communication interface 118. The processor 114, the memory 116, and the communication interface 118 communicate with each other through the bus 112. The compute device 110 may be a server or a terminal device. It should be understood that, a quantity of processors and a quantity of memories in the compute device 110 are not limited in this application.

The bus 112 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 11. However, it does not indicate that there is only one bus or only one type of bus. The bus 114 may include a path for transmitting information between components (for example, the memory 116, the processor 114, and the communication interface 118) of the compute device 110.

The processor 114 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 116 may include a volatile memory (volatile memory), for example, a random access memory (random access memory, RAM). The memory 116 may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The memory 116 stores executable program code. The processor 114 executes the executable program code to separately implement functions of the foregoing interface module and processing module, so as to implement the method for solving a system of nonlinear equations applied to the compute device cluster in the foregoing embodiments. In other words, the memory 116 stores instructions used to perform the method for solving a system of nonlinear equations applied to the compute device cluster in the foregoing embodiments.

The communication interface 118 implements communication between the compute device 110 and another device or a communication network through a transceiver module, for example, but not limited to, a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

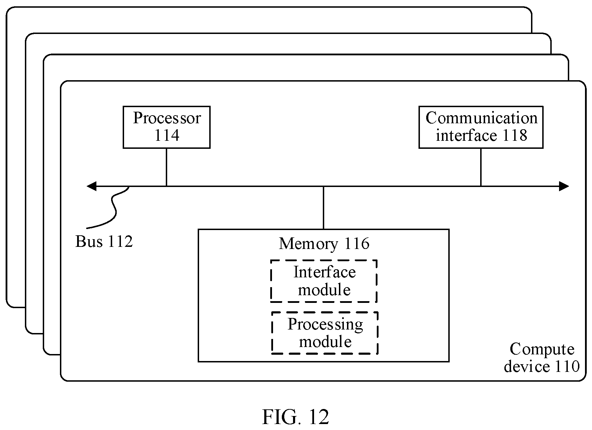

In the example shown in FIG. 12, the compute device cluster includes at least one compute device 110. The memory 116 in one or more compute devices 110 in the compute device cluster may store same instructions used to perform the method for solving a system of nonlinear equations.

In some possible implementations, the memory 116 in the one or more compute devices 110 in the compute device cluster may alternatively separately store some instructions used to perform the method for solving a system of nonlinear equations. In other words, a combination of the one or more compute devices 110 may jointly execute instructions used to perform the method for solving a system of nonlinear equations.

It should be noted that memories 116 in different compute devices 110 in the compute device cluster may store different instructions, which are respectively used to perform some functions of the method for solving a system of nonlinear equations. In other words, the instructions stored in the memories 116 in different compute devices 110 may implement functions of one or more of the interface module and the processing module.

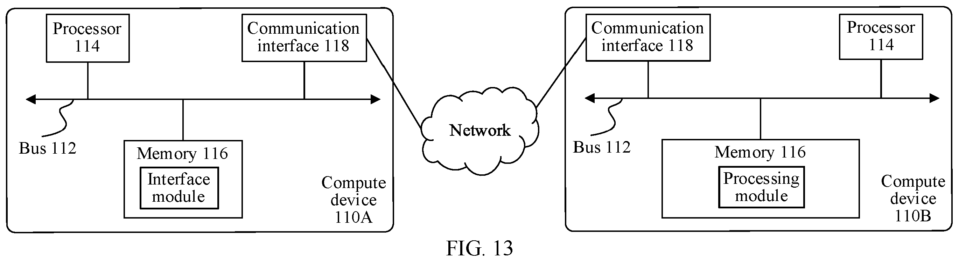

In some possible implementations, the one or more compute devices in the compute device cluster may be connected through a network. The network may be a wide area network, a local area network, or the like. FIG. 13 shows a possible implementation. As shown in FIG. 13, two compute devices 110A and 110B are connected through a network. Specifically, the compute devices are connected to the network through communication interfaces of the compute devices. In this type of possible implementation, a memory 116 in the compute device 110A stores instructions used to perform a function of the interface module. In addition, a memory 116 in the compute device 110B stores instructions used to perform a function of the processing module. Alternatively, the memory 116 in the compute device 110A may store instructions used to perform some functions of the processing module. In addition, the memory 116 in the compute device 110B may store instructions used to perform some other functions of the processing module.

It should be understood that functions of the compute device 110A shown in FIG. 13 may alternatively be completed by a plurality of compute devices 110. Similarly, functions of the compute device 110B may alternatively be completed by a plurality of compute devices 110.

An embodiment of this application further provides another compute device cluster. For a connection relationship between compute devices in the compute device cluster, refer to the connection manners in the compute device cluster in FIG. 12 and FIG. 13 similarly. A difference is that the memory 116 in one or more compute devices 110 in the compute device cluster may store same instructions used to perform the method for solving a system of nonlinear equations.

In some possible implementations, the memory 116 in the one or more compute devices 110 in the compute device cluster may alternatively separately store some instructions used to perform the method for solving a system of nonlinear equations. In other words, a combination of the one or more compute devices 110 may jointly execute instructions used to perform the method for solving a system of nonlinear equations.

It should be noted that the memories 116 in different compute devices 110 in the compute device cluster may store different instructions, which are used to perform some functions of the method for solving a system of nonlinear equations. In other words, the instructions stored in the memories 116 in different compute devices 110 may implement functions of one or more of the interface module and the processing module.

An embodiment of this application further provides a computer program product including instructions. The computer program product may be software or a program product that includes instructions and that can be run on a compute device or stored in any usable medium. When the computer program product runs on at least one compute device, the at least one compute device is caused to perform the method for solving a system of nonlinear equations.

An embodiment of this application further provide a computer-readable storage medium. The computer-readable storage medium may be any usable medium that can be stored by a compute device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the method for solving a system of nonlinear equations.

An embodiment of this application further provides a chip system. The chip system includes a processor, and the processor is configured to implement steps performed by the foregoing compute device cluster. In a possible design, the chip system may further include a memory. The memory is configured to store necessary program instructions and data. The chip system may include a chip, or may include the chip and another discrete component.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A method for solving a system of nonlinear equations, applied to a compute device cluster, wherein the method comprises:
obtaining a first system of nonlinear equations;
obtaining, based on the first system of nonlinear equations, description information of an i^{th} iteration of the first system of nonlinear equations, wherein the description information of the i^{th} iteration is used to describe system of equations feature information of the first system of nonlinear equations during the i^{th} iteration, and i is a positive integer;
performing inference on the description information of the i^{th} iteration of the first system of nonlinear equations through a neural network model, to obtain at least one first convergence policy of the i^{th} iteration; and
determining a target convergence policy according to the at least one first convergence policy, and solving the first system of nonlinear equations through the i^{th} iteration according to the target convergence policy, to obtain a target solution of the first system of nonlinear equations.

2. The method according to claim 1, wherein the description information of the i^{th} iteration comprises at least one of the first system of nonlinear equations, a Jacobian matrix of the i^{th} iteration, a right-hand side of the i^{th} iteration, and a current solution of the i^{th} iteration.

3. The method according to claim 1 or 2, wherein the target convergence policy comprises one or more of the following policies:
a convergence algorithm, a step policy, and a direction policy.

4. The method according to any one of claims 1 to 3, wherein the description information of the i^{th} iteration further comprises to-be-solved physical problem information, the first system of nonlinear equations is obtained by performing numerical simulation on the to-be-solved physical problem information, and the to-be-solved physical problem information comprises at least one of the following:
a boundary condition, mesh information, and a physical equation.

5. The method according to any one of claims 1 to 4, wherein determining the target convergence policy according to the at least one first convergence policy, and solving the first system of nonlinear equations through the i^{th} iteration according to the target convergence policy, to obtain the target solution of the first system of nonlinear equations comprises:
obtaining first configuration information, wherein the first configuration information indicates to use a recommended convergence policy set and/or at least one of a historical convergence policy set, a user-defined convergence policy set, and a default convergence policy set as convergence policy sets/a convergence policy set, the recommended convergence policy set comprises the at least one first convergence policy, and at least one of the historical convergence policy set, the user-defined convergence policy set, and the default convergence policy set comprises at least one second convergence policy;
determining a plurality of convergence policies of the i^{th} iteration based on the first configuration information, wherein the plurality of convergence policies comprise the at least one first convergence policy and/or the at least one second convergence policy;
selecting the target convergence policy from the plurality of convergence policies; and
solving the first system of nonlinear equations through the i^{th} iteration according to the target convergence policy, to obtain the target solution of the first system of nonlinear equations.

6. The method according to claim 5, wherein selecting the target convergence policy from the plurality of convergence policies comprises:
obtaining second configuration information, wherein the second configuration information comprises a performance evaluation indicator, or comprises the performance evaluation indicator and a weight corresponding to each performance evaluation indicator; and
selecting the target convergence policy from the plurality of convergence policies based on the second configuration information and performance parameter information of each of the plurality of convergence policies.

7. The method according to claim 6, wherein the performance evaluation indicator comprises one or more of the following:
nonlinear evaluation and/or linear evaluation, wherein
the nonlinear evaluation is performed based on the first system of nonlinear equations and the performance parameter information of each of the plurality of convergence policies, and the linear evaluation is performed based on a system of iteration equations corresponding to the first system of nonlinear equations and the performance parameter information of each of the plurality of convergence policies;
the nonlinear evaluation comprises one or more of the following: convergence evaluation, solving speed evaluation, and accuracy evaluation; and
the linear evaluation comprises one or more of the following: convergence evaluation, solving speed evaluation, and accuracy evaluation.

8. The method according to any one of claims 1 to 7, wherein the neural network model is obtained through training based on a data set, the data set comprises first training data and a label of the first training data, the first training data comprises description information of a second system of nonlinear equations, the description information of the second system of nonlinear equations is used to describe system of equations feature information of the second system of nonlinear equations in a historical iteration process, and the label of the first training data comprises a third convergence policy corresponding to the second system of nonlinear equations.

9. The method according to claim 8, wherein the first training data corresponds to a plurality of groups of candidate convergence policies and performance parameter information corresponding to each group of candidate convergence policies; and
the method further comprises:
receiving third configuration information input by a user, wherein the third configuration information comprises the performance evaluation indicator, or comprises the performance evaluation indicator and the weight corresponding to each performance evaluation indicator; and
determining, based on the third configuration information and the performance parameter information of each group of candidate convergence policies corresponding to the first training data, the third convergence policy in the label of the first training data from the plurality of groups of candidate convergence policies corresponding to the first training data.

10. The method according to claim 9, wherein the method further comprises:
receiving fourth configuration information input by the user, wherein the fourth configuration information indicates a policy range to which the candidate convergence policy belongs, and the policy range comprises one or more of the following: one or more convergence algorithms, one or more step policies, and one or more direction policies; and
obtaining, based on the fourth configuration information, a plurality of groups of candidate convergence policies corresponding to each piece of first training data.

11. The method according to any one of claims 1 to 10, wherein the method further comprises:
generating second training data and a label of the second training data, wherein the second training data comprises the description information of the i^{th} iteration, and the label of the second training data comprises the target convergence policy; and
training the neural network model based on the second training data, to obtain an optimized neural network model.

12. An apparatus for solving a system of nonlinear equations, comprising:
an interface module, configured to obtain a first system of nonlinear equations; and
a processing module, configured to:
obtain, based on the first system of nonlinear equations, description information of an i^{th} iteration of the first system of nonlinear equations, wherein the description information of the i^{th} iteration is used to describe system of equations feature information of the first system of nonlinear equations during the i^{th} iteration, and i is a positive integer;
perform inference on the description information of the i^{th} iteration of the first system of nonlinear equations through a neural network model, to obtain at least one first convergence policy of the i^{th} iteration; and
determine a target convergence policy according to the at least one first convergence policy, and solve the first system of nonlinear equations through the i^{th} iteration according to the target convergence policy, to obtain a target solution of the first system of nonlinear equations.

13. The apparatus according to claim 12, wherein the description information of the i^{th} iteration comprises at least one of the first system of nonlinear equations, a Jacobian matrix of the i^{th} iteration, a right-hand side of the i^{th} iteration, and a current solution of the i^{th} iteration.

14. The apparatus according to claim 12 or 13, wherein the target convergence policy comprises one or more of the following policies:
a convergence algorithm, a step policy, and a direction policy.

15. The apparatus according to any one of claims 12 to 14, wherein
the interface module is configured to obtain first configuration information, wherein the first configuration information indicates to use a recommended convergence policy set and/or at least one of a historical convergence policy set, a user-defined convergence policy set, and a default convergence policy set as convergence policy sets/a convergence policy set, the recommended convergence policy set comprises the at least one first convergence policy, and at least one of the historical convergence policy set, the user-defined convergence policy set, and the default convergence policy set comprises at least one second convergence policy; and
the processing module is configured to:
determine a plurality of convergence policies of the i^{th} iteration based on the first configuration information, wherein the plurality of convergence policies comprise the at least one first convergence policy and/or the at least one second convergence policy;
select the target convergence policy from the plurality of convergence policies; and
solve the first system of nonlinear equations through the i^{th} iteration according to the target convergence policy, to obtain the target solution of the first system of nonlinear equations.

16. The apparatus according to claim 15, wherein
the interface module is configured to obtain second configuration information, wherein the second configuration information comprises a performance evaluation indicator, or comprises the performance evaluation indicator and a weight corresponding to each performance evaluation indicator; and
the processing module is configured to select the target convergence policy from the plurality of convergence policies based on the second configuration information and performance parameter information of each of the plurality of convergence policies.

17. The apparatus according to claim 16, wherein the performance evaluation indicator comprises one or more of the following:
nonlinear evaluation and/or linear evaluation, wherein
the nonlinear evaluation is performed based on the first system of nonlinear equations and the performance parameter information of each of the plurality of convergence policies, and the linear evaluation is performed based on a system of iteration equations corresponding to the first system of nonlinear equations and the performance parameter information of each of the plurality of convergence policies;
the nonlinear evaluation comprises one or more of the following: convergence evaluation, solving speed evaluation, and accuracy evaluation; and
the linear evaluation comprises one or more of the following: convergence evaluation, solving speed evaluation, and accuracy evaluation.

18. The apparatus according to any one of claims 12 to 17, wherein the neural network model is obtained through training based on a data set, the data set comprises first training data and a label of the first training data, the first training data comprises description information of a second system of nonlinear equations, the description information of the second system of nonlinear equations is used to describe system of equations feature information of the second system of nonlinear equations in a historical iteration process, and the label of the first training data comprises a third convergence policy corresponding to the second system of nonlinear equations.

19. The apparatus according to claim 18, wherein the first training data corresponds to a plurality of groups of candidate convergence policies and performance parameter information corresponding to each group of candidate convergence policies;
the interface module is configured to receive third configuration information input by a user, wherein the third configuration information comprises the performance evaluation indicator, or comprises the performance evaluation indicator and the weight corresponding to each performance evaluation indicator; and
the processing module is configured to determine, based on the third configuration information and the performance parameter information of each group of candidate convergence policies corresponding to the first training data, the third convergence policy in the label of the first training data from the plurality of groups of candidate convergence policies corresponding to the first training data.

20. The apparatus according to claim 19, wherein
the interface module is configured to receive fourth configuration information input by the user, wherein the fourth configuration information indicates a policy range to which the candidate convergence policy belongs, and the policy range comprises one or more of the following: one or more convergence algorithms, one or more step policies, and one or more direction policies; and
the processing module is configured to obtain, based on the fourth configuration information, a plurality of groups of candidate convergence policies corresponding to each piece of first training data.

21. A compute device cluster, comprising at least one compute device, wherein the at least one compute device comprises a processor and a memory; and
the processor is configured to execute instructions stored in the memory, to cause the compute device cluster to perform the method according to any one of claims 1 to 11.

22. A computer-readable storage medium, wherein the computer-readable storage medium stores a computer program, and when the computer program is run on a processor, the processor is caused to perform the method according to any one of claims 1 to 11.

23. A computer program product comprising instructions, wherein when the instructions are executed by a processor, the method according to any one of claims 1 to 11 is implemented.
